# EUROPEAN PATENT APPLICATION

(11) **EP 2 790 107 A1**
(43) Date of publication of application: **15.10.2014**
(21) Application number: 11877024.7
(22) Date of filing: 07.12.2011
(51) Int. Cl.: G06F 12/08, G06F 12/12

(54) **PROCESSING UNIT AND METHOD FOR CONTROLLING PROCESSING UNIT**

(71) Applicant: Fujitsu Limited, Kawasaki-shi, Kanagawa 211-8588 (JP)
(72) Inventor: ISHII, Hiroyuki, Kawasaki-shi Kanagawa 211-8588 (JP); KOJIMA, Hiroyuki, Kawasaki-shi Kanagawa 211-8588 (JP)
(74) Representative: Ward, James Norman
(86) International application number: PCT/JP2011/078288
(87) International publication number: WO 2013/084315

(57) **Abstract**

A processing unit set forth in one aspect of the present invention is provided with: a plurality of processors containing a first cache memory; a second cache memory that holds data resulting from operations performed by each of the plurality of processors; an acquisition unit that acquires attribute information pertaining to the first cache memory, which is to be controlled, of the source of an access request to be controlled, said attribute information containing pathway information representing the pathway of a cache block of the first cache memory; a holding unit that holds address information and the attribute information; and a controller that controls an access request relating to a replacement request for a cache block of a second cache memory specified by address information and attribute information to be controlled, on the basis of an address to be replaced, which is included in an access request relating to a replacement request issued by one of the plurality of processors pertaining to the first cache memory, and pathway information representing the pathway of a cache block to be replaced in the first cache memory.

## Description

### TECHNICAL FIELD

The present invention relates to an arithmetic processing apparatus and a control method of an arithmetic processing apparatus.

### BACKGROUND ART

A cache memory has hitherto been used for compensating a difference between an execution speed of a processor core and an access speed to a main storage device. Most of the cache memories are hierarchized at 2 or more levels in terms of a tradeoff relationship between the access speed and a memory capacity. The hierarchized cache memories are called first level (L1) cache memories, a second level (L2) cache memory, etc. in the sequence from the closest to the processor core. Note that the processor core will hereinafter be also simply referred to as the "core". The main storage device will hereinafter be also simply referred to as a "memory" or a "main memory". The cache memory will hereinafter be also simply termed a "cache".

Data in the main memory are associated with the cache memories on a block-by-block basis. A set associative scheme is known as a method of associating blocks of the main memories with the blocks of the cache memories. Note that the blocks of the main memories are particularly referred to as the "memory blocks" for distinguishing the blocks of the main memories from the blocks of the cache memories in the following discussion. Further, the blocks of the cache memories are referred to as "cache blocks" or "cache lines".

The set associative scheme is defined as the method of dividing the main memories and the cache memories into some number of sets and associating the main memory with the cache memories within each set. Note that the "set" is also called a column. The set associative scheme specifies the number of the cache blocks of the cache memories, which are containable within each set. The number of the containable cache blocks is called a row count, a level count or a way count.

In the set associative scheme, the cache block is identified by an index and way information. To be specific, the set containing the cache blocks is identified by the index. Further, a relevant cache block in the cache blocks contained within the set is identified by the way information. The way information is, e.g., a way number used for identifying the relevant cache block.

Addresses of allocation target memory blocks are used for allocating the memory blocks and the cache blocks. In the set associative scheme, the allocation target memory block is allocated to any one of the cache blocks contained in the set specified by the index coincident with a part of the address of the memory block. Namely, the index within the cache memory is designated by a part of the address.

Note that the address used for the allocation may be any one of a physical address (real address) and a logical circuit (virtual address). Further, a part of the address, which is used for designating the index within the cache memory, is also called a set address. These addresses are expressed by bits. Note that in the main memory, the memory blocks contained in the same set are memory blocks having the same set address.

The main memory has a larger capacity than the cache memory has. Therefore, the number of the memory blocks of the main memory, which are contained in the set, is larger than the number of the cache blocks of the cache memory, which are contained in the set. Accordingly, all the memory blocks of the main memory cannot be allocated to the cache blocks of the cache memory. Namely, the memory blocks of the main memory, which are contained in each set, can be divided into the memory blocks allocated to the cache blocks of the cache memory that are contained in each set and the unallocated memory blocks.

Herein, for example, such a situation is considered that the data is acquired from the cache block allocated with the memory block in place of the memory block associated with the address designated by the processor core. In this case, within the cache memory, there is retrieved the cache block allocated with the memory block associated with the address designated by the processor core.

If the cache block is hit in this retrieval, the data designated by the processor core can be acquired from the hit cache block within the cache memory. Whereas if the cache block is not hit in this retrieval, the data designated by the processor core does not exist in the cache memory. Therefore, the data designated by the processor core is acquired from the main memory. Such a situation is also called a cache mishit.

Note that the index and a cache tag are used for retrieving the cache block allocated with the memory block associated with the address designated by the processor core. The index indicates, as described above, the set containing the relevant cache block. Further, the cache tag is a tag used for retrieving the cache block associated with the memory block within each set.

The cache tag is provided per cache block. On the occasion of allocating the memory block to the cache block, a part of the address of the memory block is stored in the cache tag associated with the cache block. A part of the address, which is stored in the cache tag, is different from the set address. Specifically, the cache tag is stored with an address having a proper bit length, which is acquired from a part given by subtracting the set address from the address of the memory block. Note that the address stored in the cache tag will hereinafter be termed a "tag address".

The cache block allocated with the memory block associated with the address designated by the processor core, is retrieved by employing the index and the cache tag described as such.

For example, to start with, the set having a possibility of containing the cache block allocated with the memory block associated with the address designated by the processor core, is retrieved from the cache memory. Concretely, the index coincident with the relevant partial address, corresponding to the set address, of the address designated by the processor core, is retrieved from the cache memory. The set indicated by the index retrieved at this time is the set having the possibility of containing the cache block allocated with the memory block associated with the address designated by the processor core.

Then, the cache block allocated with the memory block associated with the address designated by the processor core is retrieved from the cache block contained in the set indicated by the retrieved index. To be specific, the cache tag stored with a partial address, corresponding to a tag address, of the address designated by the processor core, is retrieved from within the cache tags associated with the respective cache blocks contained in the retrieved set. The cache block associated with the cache tag retrieved at this time is the cache block allocated with the memory block associated with the address designated by the processor core.

Note that if not retrieving the cache tag stored with the partial address, corresponding to the tag address, of the address designated by the processor core in the retrieval process, this is the cache mishit. In this case, the cache block allocated to the memory block associated with the address designated by the processor core does not exist within the cache memory. Therefore, the data designated by the processor core is acquired from the main memory.

The cache block allocated with the memory block associated with the address designated by the processor core is thus retrieved. With this operation, the data stored in the memory block is stored also in the cache memory, in which case this data is acquired from the cache memory. While on the other hand, the data stored in the memory block is not stored in the cache memory, in which case this data is acquired from the memory block.

Note that in addition to the set associative scheme, methods such as a direct mapping scheme and a full associative scheme are known as the methods of associating the blocks of the cache memories with the blocks of the main memories. The direct mapping scheme is defined as a method of determining the blocks of the cache memories that are associated with the blocks of the main memories by use of addresses of the blocks of the main memories. The direct mapping scheme corresponds to the associative scheme in such a case that the way count is "1" in the set associative scheme. Further, the full associative scheme is a method of associating arbitrary blocks of the cache memories with arbitrary blocks of the main memories.

On the other hand, in recent years, a multi-core processor system including a plurality of processor cores has become a mainstream in terms of improving performance and reducing power consumption per chip. In the multi-core processor systems, e.g., there is known a multi-core processor system configured such that each of the processor cores includes L1 cache memories, and a L2 cache memory is shared among the plural processor cores.

At this time, the L2 cache memory is equipped with a mechanism for keeping cache coherency defined as a matching property between the cache memories, the mechanism being provided between the L2 cache memory and the L1 cache memories held by the plurality of processor cores that share the L2 cache memory with each other. For keeping the cache coherency, when a certain processor core requests the L2 cache memory for the data, it is checked whether or not the requested data is stored in the L1 cache memory held by each processor core.

A method by which the L2 cache memory snoops the L1 cache memories of all the processor cores whenever receiving data request, is known as a method of examining whether or not the data requested from a certain processor core is stored in each L1 cache memory. In this method, however, it follows that latency (waiting time) till getting a response to the data request gets elongated to such a degree as to take a machine cycle until a query result is returned from the L1 cache memory.

Patent document 1 discloses a method of improving this latency. Patent document 1 discloses the method of eliminating the process of snooping the L1 cache memories by storing copies of the cache tags of the L1 cache memories into a cache tag of the L2 cache memory.

When the copies of the cache tags of the L1 cache memories are stored in the cache tag of the L2 cache memory, the L2 cache memory can refer to statuses of the L1 cache memories in the self cache tag. Therefore, the L2 cache memory can examine whether or not the data requested from a certain processor core is stored in each L1 cache memory without snooping the L1 cache memories. Patent document 1 discloses the method of improving the latency by the method described as such. Note that the cache tags of the L1 cache memories will hereinafter be called L1 tags. Further, the cache tag of the L2 cache memory is called an L2 tag.

It follows, however, that as a difference between a capacity of the L2 cache memory and a capacity of the L1 cache memories becomes larger, a greater quantity of the data stored in the L2 cache memory are not stored in the L1 cache memories. For this reason, if a field stored with the copy of the L1 tag is provided in the L2 tag, a field stored with the L1 tag copy in the L2 tag results in a futile field that is not substantially used. This status is not preferable in terms of a physical quantity and the power consumption, and hence the improvement thereof is demanded.

Patent documents 2 and 3 disclose methods of improving this futile field. Patent documents 2 and 3 disclose methods of storing, in place of the L1 tag copies, information indicating a shared status of the cache lines in the respective L1 cache memories in the L2 tag and storing the L1 tag copies in a field different from that of the L2 tag.

### DOCUMENTS OF PRIOR ARTS

### PATENT DOCUMENT

Patent document 1 Japanese Patent Application Laid-Open Publication No.2006-40175
Patent document 2 Japanese Patent Publication No.4297968
Patent document 3 Japanese Patent Application Laid-Open Publication No.2011-65574
Patent document 4 Japanese Patent Application Laid-Open Publication No.H05-342101

### SUMMARY OF THE INVENTION

### PROBLEMS TO BE SOLVED BY THE INVENTION

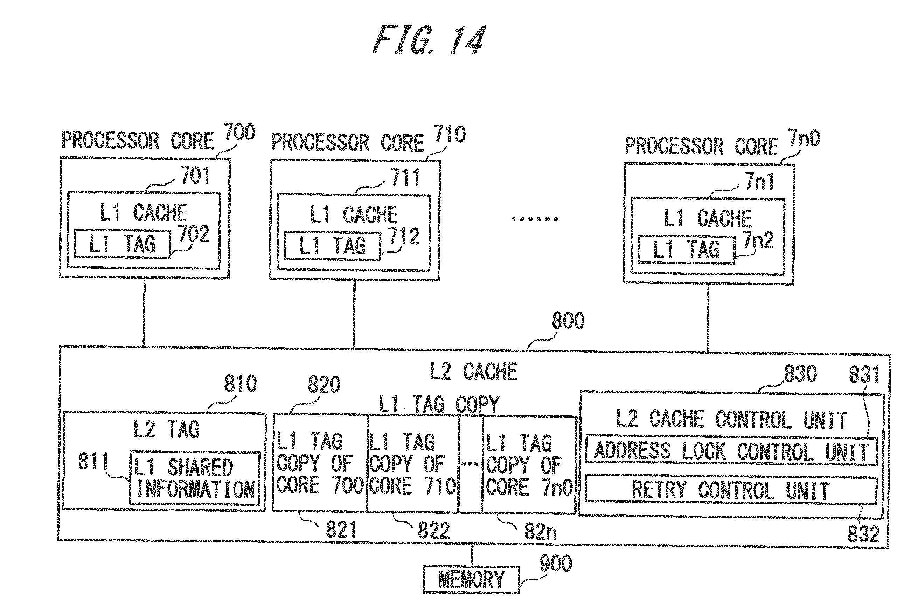

FIG. 14 illustrates an example of how first level caches (abbreviated to L1 caches or referred to as primary caches) are connected to a second level cache (abbreviated to an L2 cache or referred to as a secondary cache) in a multi-core processor. A connection example depicted in FIG. 14 is that processor cores (700, 710,..., 7n0) include L1 caches (701, 711, ..., 7n1), respectively. Note that "n" represents a natural number. Then, an L2 cache 800 is shared among the processor cores (700, 710,..., 7n0). In the connection example illustrated in FIG. 14, the L2 cache 800 exists between a set of processor cores (700, 710,..., 7n0) and a memory 900.

Further, an area of an L2 tag 810 is provided with L1 shared information 811 containing information indicating shared statuses of the cache lines among the respective L1 caches (701, 711, ..., 7n1).

Furthermore, The L2 cache 800 includes an area of L1 tag copies 820 storing copies of the L1 tags, the area of L1 tag copies 820 being separated from the area of the L2 tag 810. In FIG. 14, an L1 tag copy 821 is a copy of an L1 tag 702 defined as an L1 cache tag of the processor core 700. An L1 tag copy 822 is a copy of an L1 tag 712 as the L1 cache tag of the processor core 710. An L1 tag copy 82n is a copy of an L1 tag 7n2 as the L1 cache tag of the processor core 7n0. It is to be noted that the set-associative scheme is adopted as a data storage structure for the respective L1 caches (701, 711, ..., 7n1) and the L2 cache 800.

The L2 cache 800 executes processes in response to access requests given from the processor cores (700, 710,..., 7n0). The L2 cache 800 is equipped with one or more pipelines and is thereby enabled to perform the processes in parallel, which are executed in response to the access requests given from the processor cores (700, 710,..., 7n0). The access requests given from the processor cores (700, 710,..., 7n0) contain an access request based on L1 REPLACE. Note that the "access request" given from the processor core will hereinafter be also referred to simply as "request".

The L1 REPLACE is defined as a process that occurs in the case of, e.g., a cache mishit in the L1 caches. If the data requested from the core is not cached in the L1 cache, this data is acquired from the L2 cache or the memory and then cached in the L1 cache. In the L1 cache, the data is cached in any one of the cache lines within the set specified by the index coincident with some portion of an address of this data.

On the occasion of thus writing the data in the L1 caches, all of the cache lines within a write target set may be filled with data, and the cache lines within the write target set may have no empty space. Hereat, the data replacement process occurs on the cache lines specified based on a replacement algorithm such as an LRU (Least Recently Used) algorithm in order to write the data requested from the cores to the L1 caches. This replacement process is defined as the L1 REPLACE.

Note that in a terminology of the L1 REPLACE, the data written to a REPLACE target line will hereinafter be referred to as "REPLACE request data", and an address associated with this data will hereinafter be referred to as a "REPLACE request address", respectively. As described above, the REPLACE request data is the target data of the access request given from the core. Moreover, data to be replaced with the REPLACE request data on the basis of the L1 REPLACE is referred to as "REPLACE target data", and an address associated with this data is referred to as a "REPLACE target address", respectively.

When the L1 REPLACE occurs, the access request based on the L1 REPLACE is issued. In the L2 cache 800, when receiving this access request, e.g., in the L1 tag copy 820, REPLACE request data is overwritten to the cache line stored so far with the REPLACE target data, thus erasing the REPLACE target data.

In the L2 cache 800, the processes requested based on the access requests given from the processor cores, which contain the access request based on the L1 REPLACE as such, undergo parallel processing. The processes thus undergo the parallel processing, in which case execution of the process requested based on a subsequent access request is canceled and then retried during a period till completing the process requested based on a preceding access request in a way that depends on a content of this preceding access request.

For example, the L2 cache 800 attains, through the L2 cache control unit 830, canceling and retrying the execution of the subsequent process such as this. In the example illustrated in FIG. 14, the L2 cache control unit 830 includes an address lock control unit 831 and a retry control unit 832.

The address lock control unit 831 retains in the address retaining unit an address to be locked by the process requested based on the preceding access request. Then, the address lock control unit 831 compares an address becoming a subsequent access request target with the retained address. With this comparison, the address lock control unit 831 determines whether the target address of the process requested based on the subsequent access request is locked or not. The retry control unit 832 distinguishes, based on a determination result (match information) of the address lock control unit 831, whether the execution of the process requested based on the subsequent access request is canceled or not, and controls canceling and retrying the execution of the subsequent process. Note that the match information is 1-bit information representing whether locked or not. The determination implemented by the address lock control unit 831 will hereinafter be called a "lock check".

Herein, two types of addresses exist as the addresses to be locked. The first type of address is an address of data becoming an access request target. The second type of address is a REPLACE target address in a case where the access request given from the processor core is an access request based on L1 REPLACE. If the access request given from the processor core is the access request based on L1 REPLACE, the process requested based on the access request involves processing the REPLACE target data. Therefore, in addition to or in place of a REPLACE request address as a target address of the process requested based on the access request, the REPLACE target address is locked. With the execution of the process requested based on the access request given from the processor core, the address lock control unit 831 retains these two types of addresses as the addresses to be locked.

Furthermore, a method of using the lock target address, i.e., a full-size address as it is exists by way of a method of expressing the address retained by the address lock control unit 831, i.e., the locked address.

On the other hand, each of Patent documents 3 (Japanese Patent Application Laid-Open Publication No.2011-65574) and 4 (Japanese Patent Application Laid-Open Publication No.H05-342101) discloses a method of expressing the full-size address by use of an L2 index and an L2 way. If capable of uniquely specifying the cache line of the L2 cache that corresponds to the cache line of the L1 cache, the cache line of the L1 cache can be retrieved by exploiting information on a cache hit in the L2 cache. Each of Patent documents 3 and 4 discloses a method of associating the cache line of the L1 cache with the cache line of the L2 cache.

To be specific, the method disclosed therein is that in the case of retrieving the relevant cache line in an L1 tag copy, a difference between the L2 index and the L1 index and the L2 way are used in place of a comparative addresses used in the retrieval process in the L1 cache. Namely, the difference between the L2 index and the L1 index and the L2 way are registered in the L1 tag copy in place of the comparative addresses. Patent documents 3 and 4 disclose that a physical quantity of the L1 tag copy can be thereby reduced in the way of associating the cache lines of the L1 caches with the cache lines of the L2 cache.

The method described above enables the cache line of the L1 cache to be uniquely specified by hit information (L2 index and L2 way) on the cache hit in the L2 cache. Therefore, according to the method described above, the L2 index and the L2 way become information corresponding to the full-size address. Accordingly, the method described above enables the lock target address to be expressed by the L2 index and the L2 way in place of the full-size address.

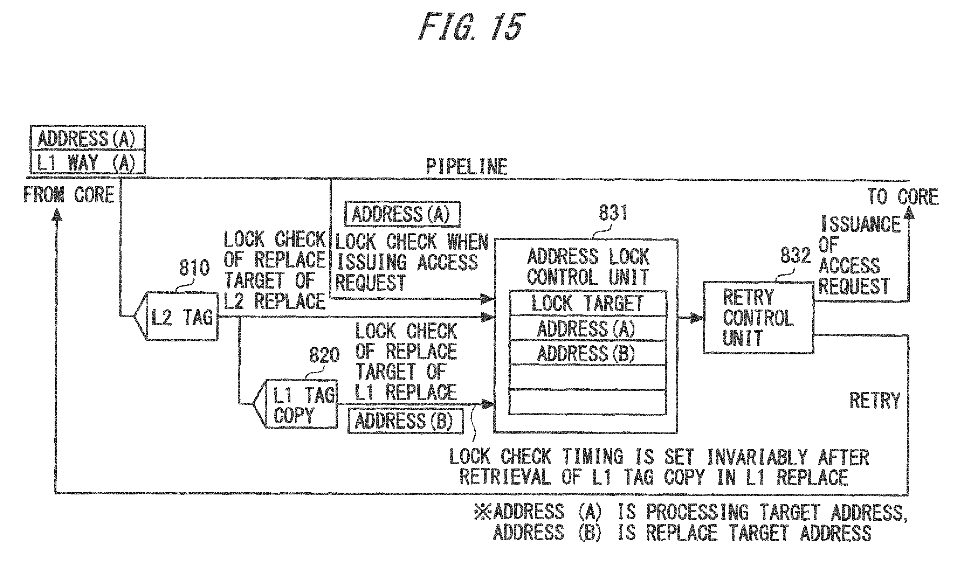

Namely, in the conventional methods, the lock target address is expressed by using the full-size address or a 2-tuple of the L2 index and the L2 way. An operation related to the conventional lock check will be described based on these promises by use of FIGS. 15 - 17. It may be assumed that the access request given from the processor core in the present example of the operation is to contain the address of the target data of the process requested based on the access request and the L1 way of the cache line of the L1 cache that is related to the access request. It is noted, the "cache line of the L1 cache that is related to the access request given from the processor core" connotes a cache line serving as a storage location stored with loaded data if the access request given from the processor core is, e.g., a load request.

FIG. 15 illustrates an operation pertaining to the lock check in the method of expressing the locked address by employing the full-size address as it is.

In the case of executing the lock check about the address of the target data of the process requested based on the access request, the address lock control unit 831 acquires the address contained in the access request given from the processor core. Note that an address (A) in FIG. 15 is the address contained in the access request given from the processor core. Then, the address lock control unit 831 compares the address acquired from the access request given from the processor core with the retained lock target address, and thus determines whether the acquired process target address is the lock target or not. The retry control unit 832 distinguishes, based on a result of the determination of the address lock control unit 831, whether the execution of the process requested based on the access request given from the processor core is canceled or not, and then controls canceling and retrying the execution of this process.

On the other hand, in the case of executing the lock check about the REPLACE target address in the access request based on the L1 REPLACE, the address lock control unit 831 acquires the REPLACE target address from the L1 tag copy 820. Note that an address (B) in FIG. 15 is the REPLACE target address. Specifically, the address lock control unit 831 retrieves the cache line coincident with the information contained in the access request based on the L1 REPLACE from the L1 tag copy 820. Note that the address (A) and the L1 (A) in FIG. 15 are defined as the information contained in the access request based on the L1 REPLACE. Then, the address lock control unit 831 acquires the REPLACE target address from the cache line indicated by the result of the retrieval.

Subsequently, the address lock control unit 831 compares the acquired REPLACE target address with the retained lock target address, thereby determining whether the REPLACE target is the lock target or not. The retry control unit 832 distinguishes, based on the result of the determination of the address lock control unit 831, whether the execution of the process requested based on the access request based on the L1 REPLACE is canceled or not, and then controls canceling and retrying the execution of this process.

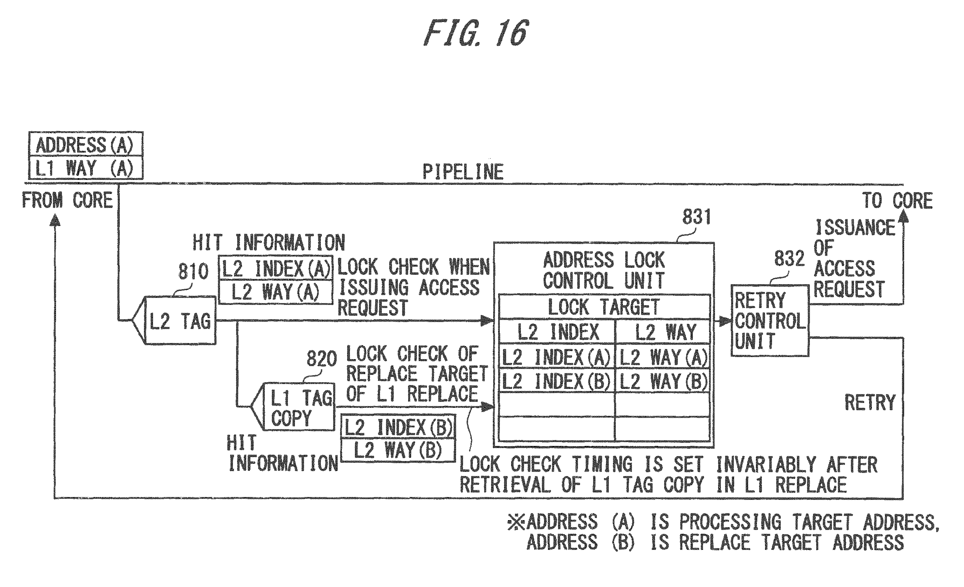

Moreover, FIG. 16 illustrates an operation pertaining to the lock check in the method of expressing the locked address by using the L2 index and the L2 way.

In the case of implementing the lock check about the address of the target data of the process requested based on the access request, the address lock control unit 831 acquires the L2 index and the L2 way that are associated with the target address of this process from the L2 tag 810. To be specific, the address lock control unit 831 retrieves, from the L2 tag 810, the cache line that hits the information contained in the access request. Note that the address (A) in FIG. 16 is the information contained in the access request. Then, the address lock control unit 831 acquires the L2 index and the L2 way that are associated with the processing target address from the cache line indicated by the result of the retrieval. Note that the L2 index (A) and the L2 way (A) in FIG. 16 are the L2 index and the L2 way that are associated with the processing target address.

Then, the address lock control unit 831 compares the acquired L2 index and L2 way with the retained L2 index and L2 way of the lock target, thereby determining whether the processing target address is the lock target or not. The retry control unit 832 distinguishes, based on the result of the determination of the address lock control unit 831, whether the execution of the process requested based on the access request given from the processor core is canceled or not, and then controls canceling and retrying the implementation of the access request.

On the other hand, in the case of executing the lock check about the REPLACE target address in the access request based on the L1 REPLACE, the address lock control unit 831 acquires the L2 index and the L2 way that are associated with the REPLACE target address from the L1 tag copy 820. Specifically, the address lock control unit 831 retrieves the cache line coincident with the information contained in the access request based on the L1 REPLACE from the L1 tag copy 820. Note that the address (A) and the L1 (A) in FIG. 15 are defined as the information contained in the access request based on the L1 REPLACE. Then, the address lock control unit 831 acquires the L2 index and the L2 way that are associated with the REPLACE target address from the cache line indicated by the result of the retrieval. It is noted, the L2 index (B) and the L2 way (B) in FIG. 16 are the L2 index and the L2 way that are associated with the REPLACE target address.

Then, the address lock control unit 831 compares the acquired L2 index and L2 way with the retained L2 index and L2 way of the lock target, thereby determining whether the REPLACE target address is the lock target or not. The retry control unit 832 distinguishes, based on the result of the determination of the address lock control unit 831, whether the execution of the process requested based on the access request based on the L1 REPLACE is canceled or not, and then controls canceling and retrying the execution of the process.

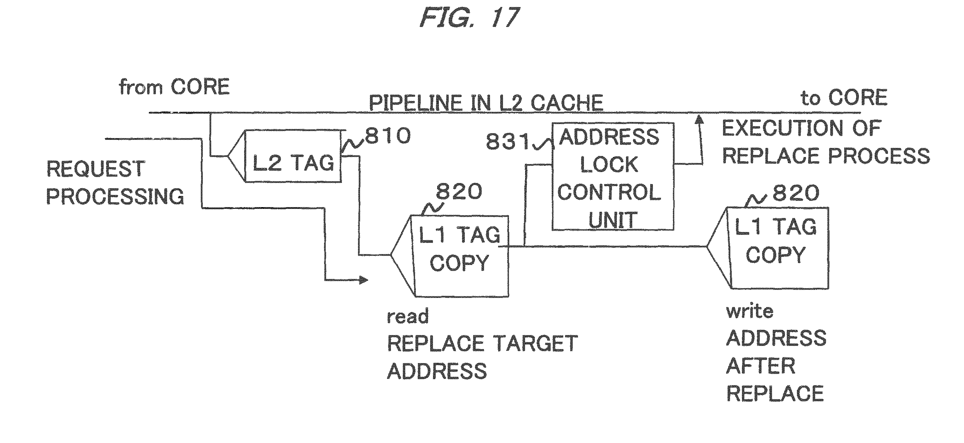

Thus, according to the conventional method, for the lock check in the access request based on the L1 REPLACE, the address lock control unit 831 executes retrieving the L1 tag copy 820 in order to acquire the REPLACE target address. FIG. 17 is a diagram of a summarized operation of the lock check depicted in FIGS. 15 and 16. FIG. 17 illustrates the operation related to the access request based on the L1 REPLACE.

As illustrated in FIG. 17, when the processor core issues the access request based on the L1 REPLACE, in the L2 cache 800, the REPLACE target address or the L2 index and the L2 way that are associated with the REPLACE target address is or are acquired from the L1 tag copy. Then, the lock check based on the REPLACE target address or the L2 index and the L2 way is executed. Subsequently, if not locked, the process related to the access request based on the REPLACE target address is executed. When the process related to the access request is executed, for instance, in the L1 tag copy 820, the REPLACE request data is overwritten to the cache line stored with the REPLACE target data. The REPLACE target data is thereby erased from the L1 tag copy 820.

In the conventional method, in the case of performing the lock check in the process requested based on the access request based on the L1 REPLACE, the retrieval process in the L1 tag copy is executed for acquiring the REPLACE target address etc..Specifically, the L2 cache memory is shared between or among the plurality of processor cores having the L1 cache memories (L1). In this case, if the REPLACE request occurs in any one of the L1 cache memories, a copy (L1 tag copy) of the tag of the L1 cache memory is retrieved in the L2 cache memory in order to specify the target address etc of the REPLACE request.

According to one aspect, it is an object of the present invention to improve the delay occurring on the occasion of the lock check about the REPLACE request target address.

### MEANS FOR SOLVING THE PROBLEMS

One aspect of a technology of the disclosure can be exemplified by an arithmetic processing apparatus that follows. The present arithmetic processing apparatus includes: a plurality of arithmetic processing units to respectively output access requests as well as to perform arithmetic operations and to include first cache memories; a second cache memory to retain data that are arithmetically processed respectively by the plurality of arithmetic processing units and to be shared between or among the plurality of arithmetic processing units; an acquiring unit to acquire attribute information about a first cache memory of a control target access requester, the attribute information containing way information indicating a way of a cache block of the first cache memory becoming a control target in the arithmetic processing unit of the control target access requester; a retaining unit to retain address information about a control target address specifying the cache block becoming a target of the control target access request in the second cache memory and to retain the acquired attribute information; and a control unit to control the access request related to a REPLACE request for the cache block of the second cache memory that is specified by the control target address information and the attribute information on the basis of a REPLACE target address contained in the access request related to the REPLACE request issued by any one of the plurality of arithmetic processing units with respect to the first cache memory and on the basis of the way information indicating a way of the REPLACE target cache block in the first cache memory.

### EFFECTS OF THE INVENTION

The present arithmetic processing apparatus can improve the delay occurring on the occasion of the lock check about the REPLACE request target address.

### BRIEF DESCRIPTION OF THE DRAWINGS

FIG. 1 illustrates an apparatus according to an embodiment;
FIG. 2 illustrates a data format of a cache tag cached in an L1 cache according to the embodiment;
FIG. 3A illustrates a lock process in a normal order according to the embodiment;
FIG. 3B illustrates the lock process in a REPLACE order according to the embodiment;
FIG. 4 illustrates the lock process of an address lock control unit according to the embodiment;
FIG. 5 illustrates an operation related to acquisition of a REPLACE target address in the embodiment;
FIG. 6A illustrates a lock check in the normal order according to the embodiment;
FIG. 6B illustrates the lock check in the REPLACE order according to the embodiment;
FIG. 7 illustrates the lock check of the address lock control unit according to the embodiment;
FIG. 8 illustrates the lock process and the lock check according to the embodiment;
FIG. 9 illustrates circuits of the address lock control unit according to the embodiment;
FIG. 10 illustrates a specific operation of the lock check according to the embodiment;
FIG. 11 illustrates the specific operation of the lock check according to the embodiment;
FIG. 12A illustrates a lock range in a conventional method;
FIG. 12B illustrates the lock range in the embodiment.
FIG. 13A illustrates influence caused by the lock range in the conventional method;
FIG. 13B illustrates the influence caused by the lock range in the embodiment;
FIG. 14 illustrates a multi-core processor system;
FIG. 15 illustrates an operation of the lock check in the case of expressing (indicating) a lock target by a full-size address;
FIG. 16 illustrates the operation of the lock check in the case of expressing (indicating) the lock target by an L2 index and an L2 way;
FIG. 17 illustrates the operation of the conventional multi-core processor system with respect to the access request based on the L1 REPLACE.

### MODE FOR CARRYING OUT THE INVENTION

An embodiment according to one aspect of the present invention will hereinafter be described on the basis of drawings. However, the embodiment, which will hereinafter be described, is no more than an exemplification of the present invention in every respect but is not designed to limit the scope of the invention. It is a matter of course that a variety of improvements and modifications can be made without deviating from the scope of the present invention. Namely, specific elements corresponding to the present embodiment may be properly adopted on the occasion of carrying out the present invention. It is to be noted that the embodiment according to one aspect of the present invention will hereinafter be also referred to as the "present embodiment".

The present embodiment, which will hereinafter be described, exemplifies a 2-level cache memory. The present invention may, however, be applied to cache memories other than the 2-level cache memory. First level caches (abbreviated to L1 caches or referred to as primary caches) in the following embodiment may also be referred to as "first cache memories" when taking account of a case of being applied to 3-level or larger-level cache memory. Moreover, a second level cache in the following embodiment may also be referred to as a "second cache memory".

Note that data occurring in the present embodiment are described in a natural language (Japanese etc.). These pieces of data are, however, specified concretely by a quasi-language, instructions, parameters, a machine language, etc., which are recognizable to a computer.

### §1 Example of Apparatus

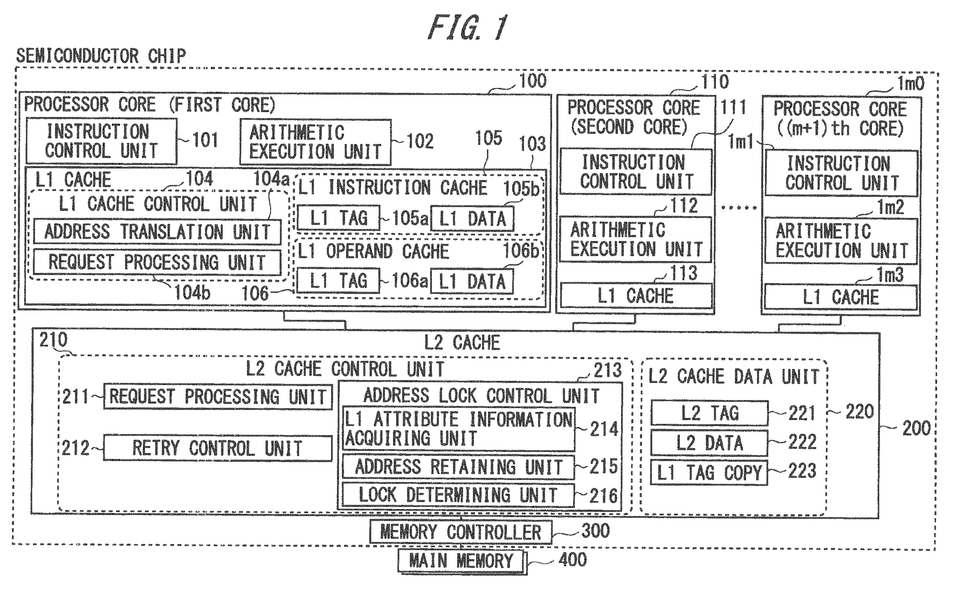

At first, an example of an apparatus according to the present embodiment will hereinafter be described by use of FIG. 1. FIG. 1 illustrates a multi-core processor system according to the present embodiment. As depicted in FIG. 1, the multi-core processor system according to the present embodiment includes (m+1) pieces of processor cores (100, 110,...,1m0), an L2 cache 200, a memory controller 300 and a main memory 400. Note that the symbol "m" connotes a natural number. In the present embodiment, the units exclusive of the main memory 400 are provided on one semiconductor chip. It does not, however, mean that the multi-core processor system according to the present embodiment is to be thus configured. A relationship between the semiconductor chip and each unit is properly determined.

The processor cores (100, 110, ..., 1m0) include instruction control units (101, 111, ..., 1m1), arithmetic execution units (102, 112, ..., 1m2) and L1 caches (103, 113,...,1m3), respectively. Note that the processor cores (100, 110, ..., 1m0) are, as illustrated in FIG. 1, also referred to as a "first core", a "second core" and an "(m+1)th core", respectively. Moreover, each of the processor cores (100, 110, ..., 1m0) corresponds to an arithmetic processing unit.

The instruction control units (101, 111, ..., 1m1) are control units that perform decoding instructions and controlling processing sequences in the respective processor cores (100, 110, ..., 1m0). To be specific, the instruction control units (101, 111, ..., 1m1) fetch instructions (machine instructions) from storage devices. The storage devices getting stored with the machine instructions are exemplified by the main memory 400, the L2 cache 200, the L1 caches (103, 113, ..., 1m3). Then, the instruction control units (101, 111, ..., 1m1) interpret (decode) the fetched instructions. Further, the instruction control units (101, 111, ..., 1m1) acquire processing target data in the instructions from the storage devices and set the acquired data in registers etc. provided in the respective processor cores (100, 110, ..., 1m0). Subsequently, the instruction control units (101, 111, ..., 1m1) control execution of the instructions for the acquired data.

The arithmetic execution units (102, 112, ...,1m2) perform arithmetic processes. Specifically, the respective arithmetic execution units (102, 112, ..., 1m2) execute the arithmetic processes corresponding to the instructions interpreted by the individual instruction control units (101, 111, ..., 1m1) with respect to the data being read to the registers etc..

The L1 caches (103, 113, ..., 1m3) and the L2 cache 200 are cache memories that temporarily retain the data to be processed by the arithmetic execution units (102, 112, ..., 1m2).

The L1 caches (103, 113, ..., 1m3) are respectively cache memories dedicated to the processor cores (100, 110, ..., 1m0). Further, the L1 caches (103, 113, ..., 1m3) are split cache memories in which the caches are split into the instruction (IF) caches and the operand caches. The instruction cache caches the data requested by an instruction access. The operand cache caches the data requested by a data access. Note that the operand cache is also called a data cache. The caches are thus split based on types of the data to be cached, thereby enabling a cache processing speed to be increased to a greater degree than by integrated caches without being split. It does not, however, mean that a structure of the cache memory used in the present embodiment is limited to the split cache memory.

On the other hand, the L2 cache 200 is a cache memory shared among the processor cores (100, 110, ..., 1m0). The L2 cache 200 is classified as the integrated cache memory to cache the instruction and the operand without any distinction therebetween. Note that the cache may also be separated on a bank-by-bank basis for improving a throughput.

Further, the L1 caches (103, 113, ..., 1m3) can process the data at a higher speed than by the L2 cache 200 but have a smaller in data storage capacity than the L2 cache 200 has. The processor cores (100, 110, ..., 1m0) compensate a difference in processing speed from the main memory 400 with the use of the L1 caches (103, 113, ..., 1m3) and the L2 cache 200, which are different in terms of their processing speeds and capacities.

Note that in the present embodiment, the data cached in the L1 caches (103, 113, ..., 1m3) are cached also in the L2 cache 200. Namely, the caches used in the present embodiment are defined as inclusion caches configured to establish such a relationship that the data cached in the high-order cache memories closer to the processor cores are included in the low-order cache memory.

For example, the L2 cache 200, when acquiring the data (address block) requested by the processor core from the memory, transfers the acquired data to the L1 cache and simultaneously registers the data in the L2 cache 200 itself. Further, the L2 cache 200, after the data registered in the L1 cache has been invalidated or written back to the L2 cache 200, writes the data registered in the L2 cache 200 itself back to the memory. The operation being thus done, the data cached in the L1 cache is included in the L2 cache 200.

The inclusion cache has an advantage that a structure and control of the cache tag are more simplified than other structures of the caches. The cache memory used in the present invention is not, however, limited to the inclusion cache.

Moreover, a data storage structure of the L1 caches (103, 113, ..., 1m3) and the L2 cache 200 involves adopting a set associative scheme. As discussed above, the cache lines of the L1 caches (103, 113, ..., 1m3) are specified by the L1 indices and the L1 ways. Further, the cache lines of the L2 cache 200 are expressed (specified) by the L2 indices and the L2 ways. Note that a line size of each of the L1 caches (103, 113, ..., 1m3) is to be the same as a line size of the L2 cache 200.

As illustrated in FIG. 1, the L1 cache 103 includes an L1 cache control unit 104, an L1 instruction cache 105 and an L1 operand cache 106. The L1 cache control unit 104 contains an address translation unit 104a and a request processing unit 104b. Further, the L1 instruction cache 105 and the L1 operand cache 106 contain L1 tags (105a, 106a) and L1 data (105b, 106b), respectively. Note that in the present embodiment, each of the L1 caches (113, ..., 1m3) is configured in the same way as the L1 cache 103 is.

The address translation unit 104a translates a logical address specified by the instruction fetched by an instruction control unit 101 into a physical address. This address translation may involve using a TLB (Translation Lookaside Buffer) or a hash table, etc..

Moreover, the request processing unit 104b processes a cache data operation based on the instruction controlled by the instruction control unit 101. For example, the request processing unit 104b retrieves the data associated with the data request given from the instruction control unit 101 from within the L1 instruction cache 105 or the L1 operand cache 106. When the relevant data is retrieved, the request processing unit 104b sends the retrieved data back to the instruction control unit 101. Whereas when the relevant data is not retrieved, the request processing unit 104b sends a result of a cache mishit back to the instruction control unit 101. Note that the request processing unit 104b processes also the operation for the data within the L1 cache on the basis of the L1 REPLACE described above. Moreover, the request processing unit 104b executes also a process of writing the data specified by the request given from the L2 cache 200 back to the L2 cache 200 on the basis of this request.

The L1 instruction cache 105 and the L1 operand cache 106 are storage units that store the data of the L1 cache 103. The L1 instruction cache 105 caches the machine instruction to be accessed when fetching the instruction. Further, the L1 operand cache 106 caches data specified in an operand field of the machine instruction.

Fields of L1 tags (105a, 106a) are respectively stored with cache tags of the L1 instruction cache 105 and the L1 operand cache 106. An address of the data cached in the cache line is specified by the cache tag and the L1 index. Further, fields of the L1 data (105b, 106b) are stored with pieces of data associated with the addresses specified respectively by the L1 indices and the L1 tags (105a, 106a).

Moreover, as illustrated in FIG. 1, the L2 cache 200 includes an L2 cache control unit 210 and an L2 cache data unit 220. The L2 cache control unit 210 controls the access request related to a REPLACE request for a cache block of the L2 cache memory that is specified by the control target address information and attribute information on the basis of a REPLACE target address contained in the access request which is related to a REPLACE request issued by any one of the plurality of arithmetic processing units with respect to the L1 cache memories and way information indicating a way of the REPLACE target cache blocks in the L1 cache memories. In the present embodiment, the L2 cache control unit 210 includes a request processing unit 211, a retry control unit 212 and an address lock control unit 213. Furthermore, the L2 cache data unit 220 contains an L2 tag (field) 221, L2 data (field) 222 and an L1 tag copy (field) 223.

The request processing unit 211 executes the processes requested based on the access requests given from the respective processor cores (100, 110, ..., 1m0). In the present embodiment, the instruction control unit 101 issues the access request given from the processor core 100.

The access request contains, e.g., a data request issued when the cache mishit occurs in the L1 cache. For example, the instruction control unit 101 is to acquire the data from the L1 cache 103 on the occasion of fetching the instruction and performing a data access operation. At this time, when the target data is not cached in the L1 cache 103, the cache mishit occurs. When the cache mishit occurs, the instruction control unit 101 is to acquire the target data from the L2 cache 200. The data request is the access request issued on this occasion from the core to the L2 cache 200.

Moreover, the access request contains the access request based on, e.g., the L1 REPLACE. For instance, the instruction control unit 101 acquires the data not cached in the L1 cache 103 from the L2 cache 200 or the main memory 400. On this occasion, the instruction control unit 101 requests the request processing unit 104b to store the acquired data in the L1 cache 103. An assumption is that the L1 REPLACE occurs on this occasion. As described above, when the L1 REPLACE occurs, the data processing is carried out within the L1 cache with the occurrence of the L1 REPLACE and within the L2 cache. The access request based on the L1 REPLACE is the access request issued by the instruction control unit 101 in order to execute the data processing within the L2 cache on this occasion.

Note that, e.g., if these processes are executed on the occasion of the instruction fetch, the acquired data is cached in the L1 instruction cache 105. Further, for instance, if these processes are executed on the occasion of accessing the data associated with the operand field of the machine instruction, the acquired data is cached in the L1 operand cache 106.

The request processing unit 211 keeps the coherency between the L1 caches (103, 113, ..., 1m3) and the L2 cache 200 and thereafter executes the processes related to these access requests. Namely, the request processing unit 211 controls the cache coherency between the L1 caches (103, 113, ..., 1m3) and the L2 cache 200. Hereat, the request processing unit 211 requests the processor cores (100, 110, ..., 1m0) to perform invalidating the cache lines and executing the write-back process with respect to the L1 caches in order to keep the cache coherency. One example thereof will be described later on.

Note that with respect to the access requests given from the processor cores, the instruction of the process related to the access request based on the L1 REPLACE will hereinafter be also referred to as an "L1 REPLACE order", while the instructions of the processes related to the access requests other than the access request based on the L1 REPLACE will be termed "normal orders". Herein, the access request may also be termed a "processing request" inclusive of the related process such as acquiring the target data of the access request.

The retry control unit 212 cancels executing the access request associated with the address locked by the address lock control unit 213, and performs retrying. In the present embodiment, the L2 cache 200 is equipped with one or more pipelines (unillustrated). As described above, the processes undergo the parallel processing, in which case the execution of the subsequent process may be canceled and then retried during a period till completing the preceding process in a way that depends on the preceding process flowing on the pipeline. The retry control unit 212 controls cancelling and retrying the execution of the subsequent process.

The address lock control unit 213 includes an L1 attribute information acquiring unit 214, an address retaining unit 215 and a lock determining unit 216. The L1 attribute information acquiring unit 214 and the address retaining unit 215 correspond to an acquiring unit and a retaining unit, respectively.

The L1 attribute information acquiring unit 214 acquires attribute information on the L1 caches (103, 113, ..., 1m3). Further, the L1 attribute information acquiring unit 214 acquires address information defined as a target of the process requested based on the access request given from the processor core. The address information is, with respect to a control target address for specifying the cache block becoming a target block of the control target access request in the L2 cache memory, e.g., a full-size address or a 2-tuple of the L2 index and the L2 way described above. In the present embodiment, the address information is the 2-tuple of the L2 index and the L2 way. Further, the attribute information contains the way information for identifying the access-request-related L1 way of the cache lines of the L1 caches. The way information is a way number specifying the L1 way of the relevant cache line. Note that the way information corresponds to way-identifying information for identifying a way within the set.

In the present embodiment, the L1 attribute information acquiring unit 214 further acquires the attribute information containing the information indicating the processor core having issued the access request and the information indicating the data type. Note that the formation indicating the processor core corresponds to identifying information identifying the arithmetic processing unit of the control target access requester, and is, e.g., a core number. Further, the information indicating the data type corresponds to information indicating a type of the data becoming the access request target data, and is also information indicating whether this data is data about the machine instruction or data designated in the operand field of the machine instruction. Note that the data about the machine instruction is the data stored in the instruction cache. Moreover, the data designated in the operand field of the machine instruction is data stored in the operand cache. These items of information are used as the information indicating the target to be locked on the occasion of executing the process while executing process requested based on the access request issued from the processor core. Further, these items of information are also used for determining whether the target of the process requested based on the access request given from the processor core is locked or not.

The address retaining unit 215 retains the address information and the attribute information, which are acquired by the L1 attribute information acquiring unit 214, as the information indicating the target to be locked on the occasion of executing the process related to the access request issued by each processor core during the execution of this process. Note that the information retained by the address retaining unit 215 will be also referred to as "lock target information".

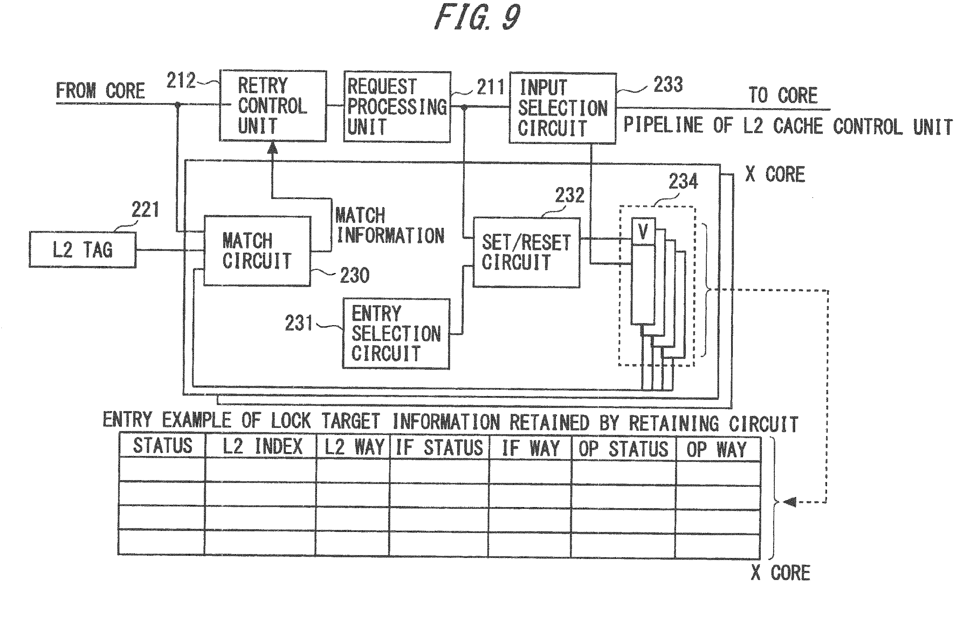

In the present embodiment, the process requested based on the access request issued by the processor core is executed, during which the address retaining unit 215 effectively retains the lock target information corresponding to this process. Then, after completing the execution of the process, the address retaining unit 215 invalidates the lock target information corresponding to this process. The invalidation of the data may be attained by deleting the data and may also be attained by a flag indicating that the data is invalid. The present embodiment adopts the latter method (see FIG. 9 that will be illustrated later on).

Note that the address retaining unit 215 retains the lock target information in such a status that the lock target core and the lock target data type can be identified as the lock targets, which are locked by the process requested based on the access request given from the processor core. The lock target core and the lock target data type may be identified in a way that the lock target information contains items of information for identifying the lock target core and the lock target data type. Further, the lock target core and the lock target data type may also be identified by preparing the lock target information per lock target core and per lock target data type. In the present embodiment, the latter mode is adopted for the lock target core, while the former mode is adopted for the lock target data type (see FIG. 9 that will be illustrated later on).

The lock determining unit 216 determines whether the target of the process requested based on the access request issued by the processor core is locked or not. To be specific, the lock determining unit 216 compares the address information corresponding to the access request and the attribute information containing the L1 way those are issued by the processor core with these items of information retained by the address retaining unit 215. The comparison being thus done, the lock determining unit 216 determines whether the target of the process requested based on the access request is locked or not. The access request, with the lock-determination being made, contains an access request based on the L1 REPLACE.

The address lock control unit 213 controls, through these units, the process requested based on the access request issued by the processor core. The system according to the present embodiment, with this address lock control unit 213 controlling the address lock, improves a delay caused when conducting the lock check about the address becoming the target of the REPLACE request. Note that a detailed operation of the address lock control unit 213 will be mentioned later on.

The L2 cache data unit 220 is a storage unit for storing the data of the L2 cache 200. Each field of an L2 tag 221 is stored with each of cache tags of the L2 cache 200. An address of the data cached in the cache line within the L2 cache 200 is specified by the cache tag and the L2 index. Further, each field of the L2 data 222 is stored with data associated with the address specified by the L2 index and by the tag in the L2 tag 221. Moreover, each field of an L1 tag copy 223 is stored with each of copies of the cache tags of the L1 caches (103, 113, ..., 1m3). The L1 tag copy 223 is e.g., a set of the copies of the L1 tags (105a, 106a).

Note that the multi-core processor system according to the present embodiment includes, as illustrated in FIG. 1, the memory controller 300 and the main memory 400. The main memory 400 processes writing and reading the data to and from the main memory 400. For example, the memory controller 300 writes write-back target data to the main memory 400 in accordance with a data write-back process executed by the request processing unit 211. Further, the memory controller 300 reads, in response to a data request given from the request processing unit 211, the request-related data from the main memory 400. It is to be noted that the main memory 400 is a main storage device utilized in the multi-core processor system according to the present embodiment.

### §2 Data Formats

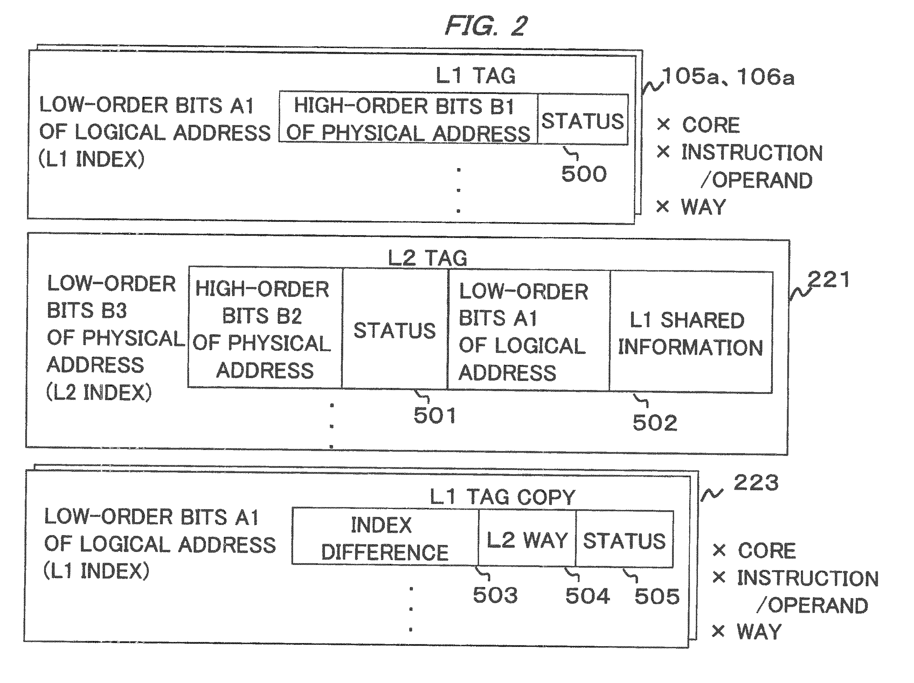

Next, data formats of the cache tags treated in the present embodiment will be described by use of FIG. 2A-2C. FIG. 2A illustrates a data format of the cache tags cached in the L1 caches (103, 113, ..., 1m3). FIG. 2B illustrates a data format of the cache tag cached in the L2 cache 200. Note that FIG. 2 illustrates the data format of the cache tag for the single cache line. Further FIG. 2C illustrates a data format of the L1 tag copy 223.

An example depicted in FIG. 2A-2C is that each of entries of the L1 tags (105a, 106a) has fields for storing a physical address high-order bit B1 and a status 500. The physical address high-order bit B1 is used for retrieving the cache line. Further, the status 500 is defined as information indicating whether the data cached in the cache line associated with the cache tag is valid or not, whether the data is updated or not, and so on. The data cached in the L1 cache is retrieved based on the thus-structured L1 tag.

To be specific, at first, the request processing unit 104b retrieves a set allocated with the L1 index coincident with low-order bits of a logical address allocated from the instruction control unit 101 from within the L1 instruction cache 105 or the L1 operand cache 106. If being an operation at a stage of fetching the instruction, the request processing unit 104b retrieves the relevant set from the L1 instruction cache 105. Further, if being an operation in the process of acquiring the data specified in the operand field of the machine instruction, the request processing unit 104b retrieves this relevant set from the L1 operand cache 106.

Next, the request processing unit 104b retrieves, from within the relevant set, the cache line cached with the data specified by the logical address allocated from the instruction control unit 101. This retrieval is done by using the physical address. Hence, the address translation unit 104a translates, into the physical address, the logical address allocated from the instruction control unit 101 before this retrieval.

Namely, in the L1 cache 103, the index is given by the logical address (virtual address), while the cache tag is given by a real address (physical address). This type of method is called a VIPT (Virtually Indexed Physically tagged) method (i.e., the cache is indexed by the virtual address and tagged by the physical address).

The address allocated from the core is the logical address. Therefore, according to a PIPT (Physically Indexed Physically Tagged) method of giving the index by the physical address (i.e., the cache is indexed and tagged by the physical addresses), the relevant cache line is retrieved after performing the translation process from the logical address into the physical address. By contrast with this method, according to the VIPT method, the specifying process of the index and the translation process from the logical address into the physical address can be done in parallel. Hence, the VIPT method is smaller in latency than the PIPT method.

Moreover, in a VIVT (Virtually Indexed Virtually Tagged) method of giving the cache tag also by the logical address (i.e., the cache is indexed and tagged by the virtual addresses), such a problem (homonym problem) arises that different physical addresses are allocated to the same virtual address. The VIPT method involves applying the physical address to the cache tag and is therefore capable of detecting the homonym problem.

These advantages lead to adopting the VIPT method for the caches used in the present embodiment. It does not, however, mean that the caches used in the present invention are limited to the VIPT method.

The request processing unit 104b compares the high-order bits of the physical address translated by the address translation unit 104a with the high-order bits B1 of the physical address of each entry of the L1 tag. The cache line associated with the entry of the L1 tag containing the high-order bits B1 of the physical address, which are coincident with the high-order bits of the physical address translated by the address translation unit 104a, is the cache line cached with the data specified by the logical address allocated by the instruction control unit 101. Hence, the request processing unit 104b retrieves the entry of the high-order bits B1 of the physical address coincident with the high-order bits of the allocated physical address from within the L1 tag associated with the cache line contained in the retrieved set.

Finally, as a result of the retrieval, when detecting the entry of the relevant L1 tag, the request processing unit 104b acquires the data cached in the cache line associated with the entry of the relevant L1 tag, and hands over the acquired data to the instruction control unit 101. Whereas when not detecting the entry of the relevant L1 tag, the request processing unit 104b determines that the result is the cache mishit, and notifies the instruction control unit 101 that the specified data is not cached in the L1 cache 103. In the present embodiment, the data cached in the L1 caches are thus retrieved.

Note that the entries of the L1 tags are prepared on a per core basis, a per data type basis, a per index basis and a per way basis. FIG. 1 illustrates that the entries of the L1 tags are prepared on the per core basis, the per index basis and the per data type basis. Moreover, in the present embodiment, the data storage structure of the L1 caches (103, 113, ..., 1m3) adopts the set associative scheme, and hence the entries of the L1 tags are prepared on the per way basis (see FIG. 9 that will be illustrated later on).

Further, in an example depicted in FIG. 2B, each of entries of the L2 tag 221 has fields for storing physical address high-order bits B2, a status 501, logical address low-order bits A1 and L1 shared information 502.

The physical address high-order bits B2 are used for retrieving the cache line in the L2 cache 200. The status 501 is defined as information indicating whether the data cached in the cache line associated with the cache tag is valid or not, whether the data is updated in the L2 cache 200 or not, and so on.

Moreover, the logical address low-order bits A1 are used for obviating, e.g., a synonym problem. The present embodiment adopts the VIPT method in the L1 caches. Hence, there is a possibility that the synonym problem arises, in which the different logical addresses are allocated to the same physical address. In the present embodiment, it is feasible to detect whether the synonym problem arises or not by referring to the logical address low-order bits A1.

The L1 shared information 502 is information indicating the shared status among the L1 caches (103, 113, ..., 1m3) with respect to the data cached in the cache lines associated with the cache tags (refer to, e.g., Patent documents 2 and 3). A field stored with the L1 shared information 502 is provided in place of the field stored with the L1 tag copy 223 in order to reduce a physical quantity of the L2 tag 221. The data cached in the L2 cache 200 is retrieved by use of the L2 tag 221 described as such.

The data retrieval can be described substantially in the same way as the retrieval process in the L1 cache 103 is described. Specifically, the request processing unit 211 retrieves, to begin with, the set allocated with the L2 index coincident with the low-order bits of the physical address contained in the access request given from the core. Note that the address of the processing target contained in the access request given from the core will hereinafter be referred to as a "request address".

Next, the request processing unit 211 retrieves the cache line cached with the data specified by the request address allocated from the processor core in the cache lines contained in the relevant set. To be specific, the request processing unit 211 retrieves, from within the L2 tag 221 associated with the cache lines contained in the retrieved set, the entry of the L2 tag 221 containing the physical address high-order bits B2 coincident with the high-order bits of the request address allocated from the core.

Finally, as a result of the retrieval, when detecting the entry of the relevant L2 tag 221, the request processing unit 211 acquires the data cached in the cache line associated with the entry of the relevant L2 tag 221, and hands over the acquired data to the processor core having issued the access request. Whereas when not detecting the entry of the relevant L2 tag 221, the request processing unit 211 determines that the result is the cache mishit. Then, the request processing unit 211 requests the main controller 300 for the data specified by the request address. The main controller 300 acquires the requested data from the main memory 400 in response to the request given from the request processing unit 211, and hands over the acquired data to the L2 cache 200.

Note that the data storage structure of the L2 cache adopts the set associative scheme, and hence the entries of the L2 tag 221 are prepared on the per index basis and the per way basis (see FIG. 9 that will be illustrated later on).

Moreover, a data storage capacity of the L2 cache 200 is larger than the data storage capacity of the L1 cache 103. Then, in the present embodiment, a size of the cache line of the L1 cache 103 is the same as the size of the cache line of the L2 cache 200. Therefore, normally, the number of sets of the L2 cache 200 is larger than the number of sets of the L1 cache 103. In this case, a bit length of the L2 index is larger than the bit length of the L1 index. Hence, in this instance, a bit length of the physical address high-order bits B2 is smaller than the bit length of the physical address high-order bits B1. It is, however, considered that the bit length of the physical address high-order bits B1 may be smaller than and may also be the same as the bit length of the physical address high-order bits B2 depending on the cache capacities, the number of ways, etc. thereof. These relationships are properly selected.

Further, in the example illustrated in FIG. 2C, each of the entries of the L1 tag copy 223 has fields for storing an index difference 503, an L2 way 504 and a status 505.

The index difference 503 is a difference between the logical address low-order bits A1 and physical address low-order bits B3. Further, the L2 way 504 is an L2 way representing (indicating) the cache line of the L2 cache, which is associated with the L1 tag copy 223. In the present embodiment, the data cached in the L1 caches are to be cached in the L2 cache, thereby specifying the L2 way 504. Through the index difference 503 and the L2 way 504, the entry of the L1 tag copy 223 is associated with the entry of the L2 tag 221 (refer to Patent documents 3 (Japanese Patent Application Laid-Open Publication No.2011-65574) and 4 (Japanese Patent Application Laid-Open Publication No.H05-342101)). Note that the status 505 is defined as information indicating whether the data cached in the cache line associated with the cache tag is valid or not, whether the data is updated or not in the L1 caches (103, 113, ..., 1m3), and so on.

It is noted, according to the L1 tag copy 223 described above, the L2 cache 200 can execute the retrieval of the L1 tag copy 223 by use of the retrieval result of the L2 tag 221.

To be specific, the request processing unit 211 refers to the L2 tag 221 in order to retrieve the relevant data from the L2 cache 200. If the relevant data exists within the L2 cache 200, the entry in the L2 tag 221 associated with the cache line cached with the relevant data is retrieved through the retrieval of the L2 tag 221 by using the physical address of the relevant data. This retrieval being thus done, it is feasible to specify the L2 index related to the retrieval target data and the L2 way. The L1 index related to the retrieval target data is specified by a part of the L2 index or by the logical address low-order bits A1 in the L2 tag 221. Hence, the L1 index and the L2 index related to the retrieval target data and the L2 way are specified through the retrieval of the L2 tag 221.

Herein, the entry of the L1 tag copy 223 can be specified by the L1 index, the index difference 503 and the L2 way 504. The index difference 503 is a difference between the L1 index (the logical address low-order bits A1) and the L2 index (the physical address low-order bits B3). Hence, the L2 cache 200 can specify the entry of the L1 tag copy 223 associated with the retrieval target data from the L1 index, the L2 index and the L2 way, which are specified through the retrieval of the L2 tag 221.

Note that the L1 index related to the retrieval target data is contained in the L2 index as the case may be. In this case, the L1 index may also be specified from the L2 index. Furthermore, the access request given from the processor core contains the information on the index as the case may be. In this case, the L1 index may also be specified from the information contained in the access request given from the processor core. Note that the information on the L1 index, which is contained in the access request given from the processor core, is, e.g., the logical address itself.

It is to be noted that the cache memory in the present embodiment is classified as the inclusion cache, and hence, if the relevant data does not exist in the L2 cache 200, this data does not exist in the L1 cache either. Therefore, it does not happen that the entry in the L1 tag copy 223 is retrieved with respect to the data not existing in the L2 cache 200.

It is noted, the logical address low-order bits A1 are contained in the physical address low-order bits B3 as the case may be in a way that depends on an associative relationship between the logical address and the physical address. In this case, the bit length of the index difference 503 is equalized to a difference between the bit length of the physical address low-order bits B3 and the bit length of the logical address low-order bits A1.

Further, if an addition of the bit length of the index difference 503 to the bit length of the L2 way 504 is smaller than the bit length of the physical address high-order bits B1, the physical quantity of the L1 tag copy 223 is reduced to a greater degree than in the case of copying the L1 tag as it is.

This L1 tag copy 223 is used mainly for keeping the coherency between the L1 caches (103, 113, ..., 1m3) and the L2 cache 200 (refer to Patent documents 1 - 3(Japanese Patent Application Laid-Open Publication No.2006-40175, Japanese Patent Publication No.4297968 and Japanese Patent Application Laid-Open Publication No.2011-65574)). Note that the L1 tag copy 223 is prepared, for the same reason as the reason for the L1 tag, on the per core basis, the per data type basis and the per way basis.

### §3 Address Lock Control Unit

### <Operational Example>

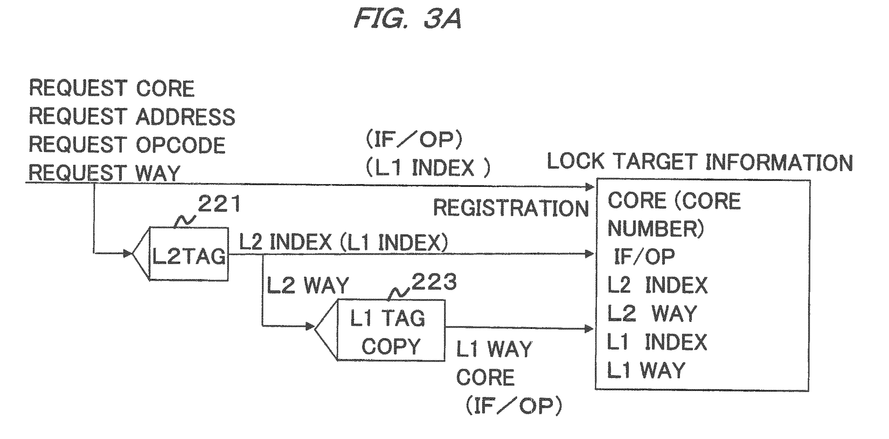

Next, an operational example of the address lock control unit 213 according to the present embodiment will be described by use of FIGS. 3A, 3B, 4, 5, 6A, 6B, 7 and 8.

### <Registration of Address>

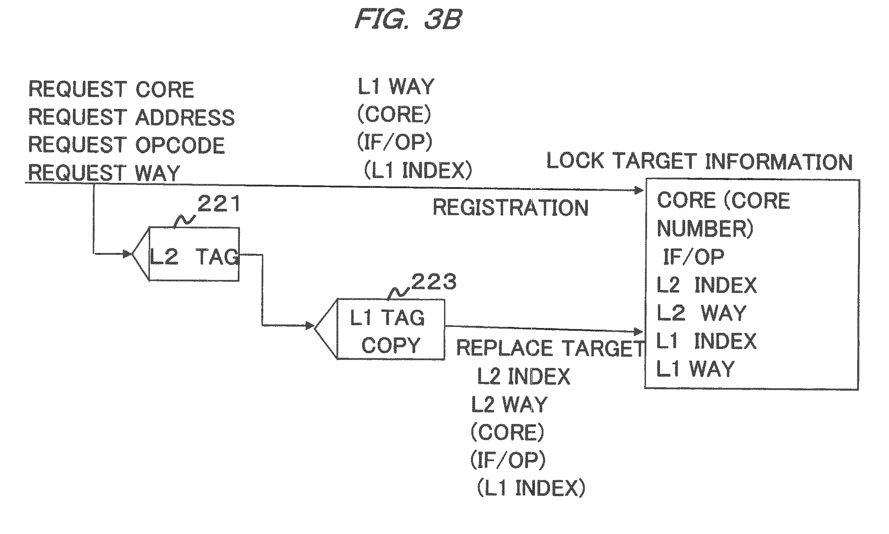

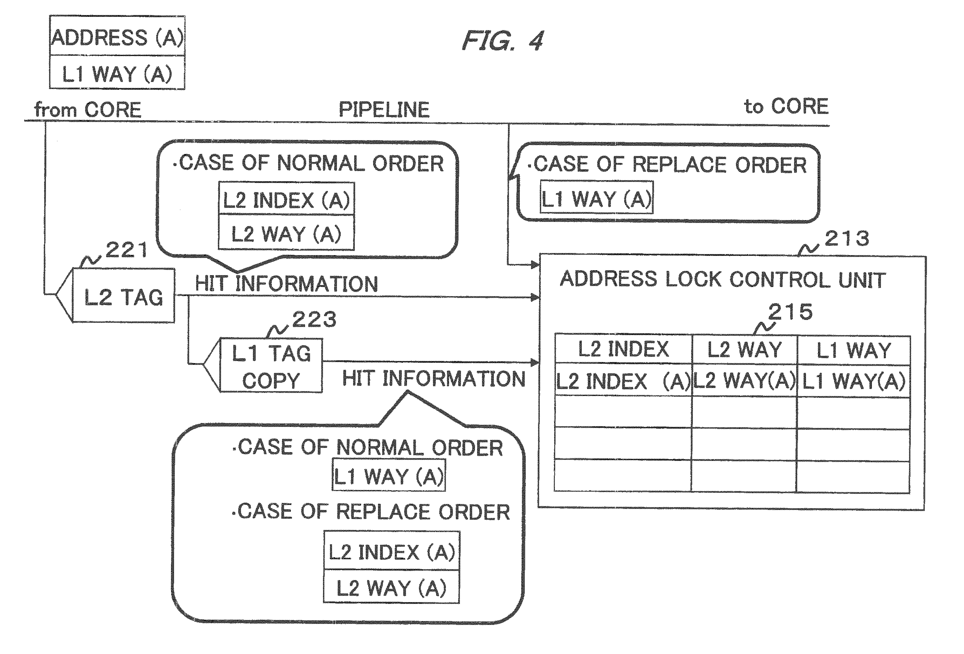

In advance, a description of how the address lock control unit 213 according to the present embodiment performs a process of registering a lock target address will be made by use of FIGS. 3A, 3B, 4 and 5. FIG. 3A illustrates the registering process in a case where the instruction of the process related to the access request given from the processor core is a normal order. Further, FIG. 3B illustrates the registering process in a case where the instruction of the process related to the access request given from the processor core is a REPLACE order. Note that FIG. 4 is a diagram depicting what the registering processes illustrated in FIGS. 3A and 3B are integrated. FIG. 4 illustrates the process of how the address lock control unit 213 according to the present embodiment performs the process of registering the lock target address.

The address lock control unit 213 acquires the lock target information for specifying the lock target by use of the information specified by the access request given from the processor core. Then, the address lock control unit 213 gets the address retaining unit 215 to retain the acquired lock target information. In the present embodiment, the lock target information is retained by the address retaining unit 215, during which the target specified by the lock target information comes to a status of being registered as the lock target.

Note that as illustrated in FIGS. 3A and 3B, six items of information such as the lock target core, the data type, the L2 index, the L2 way, the L1 index and the L1 way can be specified from the lock target information retained as the information indicating the lock target. It is to be noted that all of these six items of information may not be specifiable from the lock target information. For example, some of these six items of information may also be specifiable from the lock target information.

Further, the lock target information depicted in FIGS. 3A and 3B contains the six items of information such as the lock target core, the data type, the L2 index, the L2 way, the L1 index and the L1 way as the information for specifying the lock target. The lock target core, the data type, the L2 index, the L2 way, the L1 index and the L1 way can be thereby specified from the lock target information illustrated in FIGS. 3A and 3B.

Even when the lock target information does not contain the information indicating the lock target, however, it is feasible to specify the lock target indicated by information not contained in the lock target information. For example, an entry for storing the lock target information is prepared on the per core basis, in which case the lock target core can be specified even when the lock target information does not contain the information indicating the core.

Therefore, the following discussion on the address registering process using FIGS. 3A and 3B will be made on the premise that the lock target information contains the information for specifying the lock target, however, some pieces of the information for specifying the lock target may not be contained in the lock target information. If capable of specifying the lock target, the information contained in the lock target information may be properly selected.

At first, with respect to the process of registering the lock target information, the information specifiable by the access request given from the processor core will be described. As illustrated in FIGS. 3A and 3B, the L2 cache 200 can specify a request address, a request core, a request opcode and a request way from the access request given from the processor core.

The request address is, as described above, a physical address of the main memory 400 stored with the target data of the process requested based on the access request issued by the processor core. The request address may contain a logical address associated with the physical address. Further, the request address may contain not the logical address itself but the logical address low-order bits A1 (L1 index) used for retrieving the cache line of the L1 cache. The access request given from the processor core contains these items of information. The L2 cache 200 can specify the request address from the information contained in the access request given from the processor core.

The request core indicates the core having issued the access request. The L2 cache 200 can specify the request core by specifying the core to which the access request flows. Note that the information indicating the core having issued the access request is contained in the access request given from the processor core, whereby the request core may be specified.

The request opcode indicates a data type designated by the access request given from the processor core. As described above, two types of data exist as the data type, in which one type is the data about the machine instruction fetched by the instruction fetch, and another type is the data acquired from the address designated in the operand field of the machine instruction.

In the execution of the machine instruction, each processor core basically reads the machine instruction (instruction fetch), decodes the readout machine instruction (decode), reads the target operand data of the machine instruction (operand fetch), executes the arithmetic operation, and stores a result thereof. At this time, in a phase of the instruction fetch, each core makes the request for the data related to the machine instruction. Moreover, in a phase of the operand fetch, the core makes a request for the operand data designated in the operand field of the machine instruction. Namely, the instruction control unit of each core makes the request for any one of these two types of data in a processing phase at the timing when issuing the access request (data request).

A difference between these requests is reflected in the opcode indicating the access request issued by the instruction control unit. If the instruction control unit makes the request for the data to be stored in the instruction cache within the L1 cache, the access request containing the opcode such as "0x00 IF-MI-SH" is issued. On the other hand, if the instruction control unit makes the request for the data to be stored in the data cache within the L1 cache, the access request containing any of the opcodes such as "0x01 OP-MI-SH" and "0x02 OP-MI-EX" is issued. The L2 cache 200 can specify the request opcodes by decoding these opcodes.

The request way indicates the L1 way of the cache line within the L1 cache, the L1 way serving as a data storage location designated by the access request given from the processor core. The access request from the core contains information indicating the L1 way. The L2 cache 200 can specify the request way by this information. Note that the REPLACE is the replacement of the data in the same cache line, and hence the cache line to be stored with the data designated by the REPLACE request address and the cache line stored so far with the data designated by the REPLACE target address, belong to the same "way". Therefore, if the instruction of the process related to the access request given from the processor core is the L1 REPLACE order, the request way indicates the L1 way associated with the REPLACE request address and also indicates the L1 way associated with the REPLACE target address.

Described next is a process of acquiring the information for specifying the lock target by use of the information specifiable by the access request given from the processor core. This process differs depending on whether the instruction of the process related to the access request given from the processor core is the normal order or the REPLACE order. This process will be described by use of FIGS. 3A and 3B.

If the instruction of the process related to the access request given from the processor core is the normal order, the information for specifying the lock target is acquired in the way as illustrated in FIG. 3A. For instance, with respect to the L2 index and the L2 way, the relevant entry in the L2 tag 221 is retrieved based on the request address specified from the information contained in the access request given from the processor core. If the data specified by the request address is stored in the L2 cache 200, the entry of the L2 tag 221, which is associated with the request address, is found out through this retrieval. In this case, the L1 attribute information acquiring unit 214 acquires the L2 index and the L2 way of the cache line stored with the data specified by the request address on the basis of the retrieving process for the L2 tag 221.

Note that if the entry of the L2 tag 221 is not found out, the retrieving target data is not stored in the L2 cache 200. In this case, the request processing unit 211 acquires the relevant data from the main memory 400, and stores the acquired data in the L2 cache 200. At this time, a storage location of the data acquired from the main memory 400 is specified before acquiring the data.

Concretely, the set containing the cache line, in which the relevant data is to be stored, is specified in the retrieving process within the L2 cache 200 that is executed before acquiring the data from the main memory 400. If the cache lines within the set have empty lines, any one of these empty lines is specified as a data storage location. Whereas if the cache lines within the set have no empty line, the REPLACE process is executed. Then, a REPLACE target line is specified, thereby specifying the data storage location. It is noted, the REPLACE process as such will hereinafter be called "L2 REPLACE".

The data storage location specified at this time becomes a target of the process requested based on the access request given from the processor core. Hence, the L1 attribute information acquiring unit 214 acquires the L2 index and the L2 way that indicate the specified data storage location as the information for specifying the lock target. Note that this acquisition may be conducted at any timing before and after the process of acquiring the data from the main memory 400.

It is to be noted that in the retrieval of the entry of the L2 tag 221, the L1 attribute information acquiring unit 214 may acquire the L1 index as the information for specifying the lock target. If the L1 index is contained in the L2 index, the L1 attribute information acquiring unit 214 may specify the L1 index from the acquired L2 index. Moreover, the L1 index may also be specified from the logical address low-order bits A1 contained in the entry of the L2 tag 221.

Further, as described above, in the L2 cache 200, the entry of the L1 tag copy 223 can be retrieved by using the retrieval result of the L2 tag 221. This retrieval being thus made, if the relevant entry is found out within the L1 tag copy 223, the L1 attribute information acquiring unit 214 may acquire the L1 way of the cache line associated with the relevant entry by way of the information for specifying the lock target.

Note that the L1 tag copy 223 is provided on the per core basis and the per data type basis at this time. Therefore, the L1 attribute information acquiring unit 214 may acquire, from the L1 tag copy 223, the information indicating the core having issued the access request and the information indicating the data type as the information for specifying the lock target.

Further, the L1 attribute information acquiring unit 214 can specify the type of the data related to the access request from the request opcode specifiable from the information contained in the access request given from the processor core. Furthermore, the L1 attribute information acquiring unit 214 can specify the L1 index from the request address specifiable from the information contained in the access request given from the processor core. Hence, the L1 attribute information acquiring unit 214 may acquire the information indicating the data type and the L1 index by way of the information for specifying the lock target by specifying these items.

On the other hand, if the instruction of the process related to the access request given from the processor core is the REPLACE order, as depicted in FIG, 3B, the information for specifying the lock target is acquired. For instance, the L1 index of the REPLACE target line is specified from the logical address low-order bits A1 contained in the request address or stored in the entry of the L2 tag 221. Moreover, the L1 way of the REPLACE target line is specified from the request way. The L1 index and the L1 way being thus specified, the L1 attribute information acquiring unit 214 can acquire the L1 index and the L1 way that indicate the lock target.

Further, the L1 attribute information acquiring unit 214 refers to the entry of the L1 tag copy 223, which is indicated by the L1 index and the L1 way. The L1 attribute information acquiring unit 214 can acquire, from the entry being referred to, the L2 index and the L2 way indicating the cache line within the L2 cache 200, which corresponds to the REPLACE target line in the L1 cache.

Further, the L1 tag copy 223 include the entry on the per core basis and the per data type basis. Therefore, the L1 attribute information acquiring unit 214 may also acquire the information indicating the lock target core and the information indicating the data type as the information indicating the lock target by referring to the L1 tag copy 223. Moreover, the L1 attribute information acquiring unit 214 may also acquire the L1 index as the information specifying the lock target from the L1 tag copy 223.

Still further, the L1 attribute information acquiring unit 214 may also acquire the information indicating the lock target core from the request core. The L1 attribute information acquiring unit 214 may also acquire the information indicating the data type from the request opcode. The L1 attribute information acquiring unit 214 may also acquire the L1 index from the request address.

Finally, the address retaining unit 215 retains the lock target information containing the thus-acquired lock target core, data type, L2 index, L2 way, L1 index and L1 way. In the present embodiment, the address retaining unit 215 retains the lock target information, during which the target indicated by the lock target information comes to a status of being registered as the lock target in the address lock control unit 213.

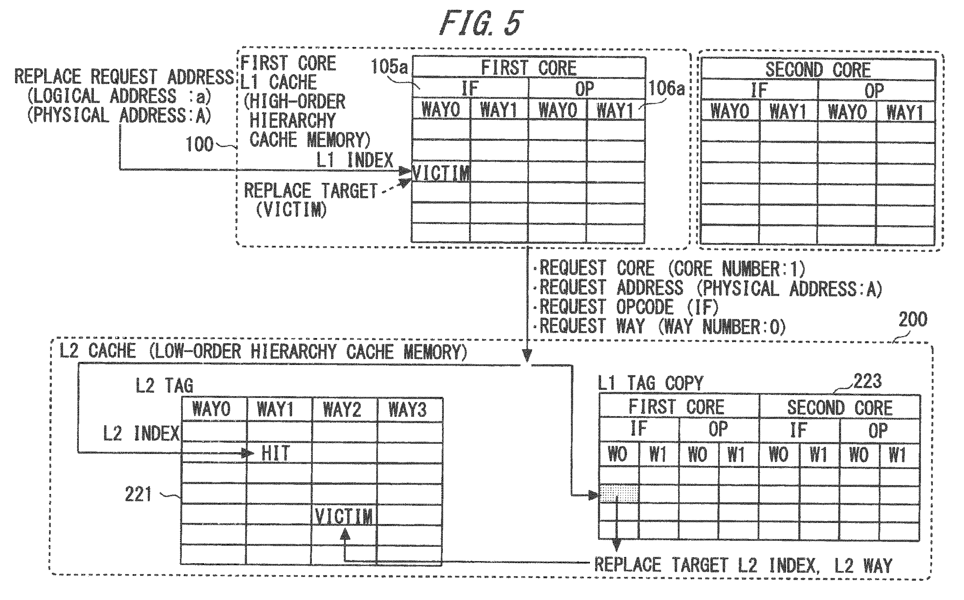

FIG. 5 is a diagram illustrating an operation at that time. As illustrated in FIG. 5, the data designated by the REPLACE request address is different from the data designated by the REPLACE target address. Therefore, the retrieval of the relevant entry in the L1 tag copy 223 is implemented in order to specify the cache line in the L2 cache stored with the data designated by the REPLACE target address. Note that an entry with "hit" being written in the L2 tag 221 in FIG. 5 is the entry corresponding to the cache line stored with the data designated by the REPLACE request address. Further, an entry with "victim" being written in the L2 tag 221 in FIG. 5 is the entry corresponding to the cache line stored with the data designated by the REPLACE target address.

Note that in the operational example depicted in FIG. 3B, the L2 tag 221 is to be retrieved before retrieving the L1 tag copy 223 in order to obviate the synonym problem about the REPLACE request address (refer to Patent document 2). Others are the same as those in the operation on the occasion of the normal order, and hence their explanations are omitted. It is to be noted that the core and the data type are taken into consideration for specifying the entry within the L1 tag copy 223 in the present embodiment. FIG. 4 is a diagram in which the operational examples illustrated in FIGS. 3A and 3B are simplified and thus aggregated into one example. In this manner, the lock target address is registered in the address lock control unit 213.

### <Lock Check>

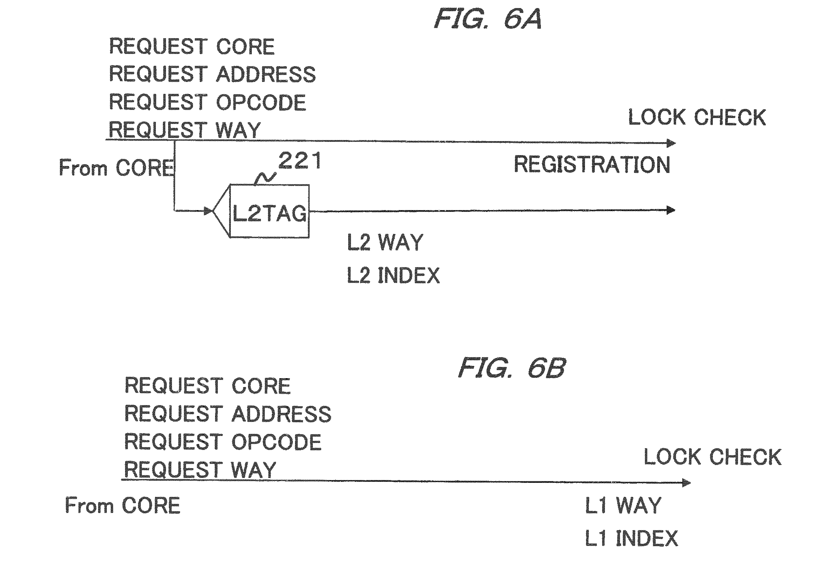

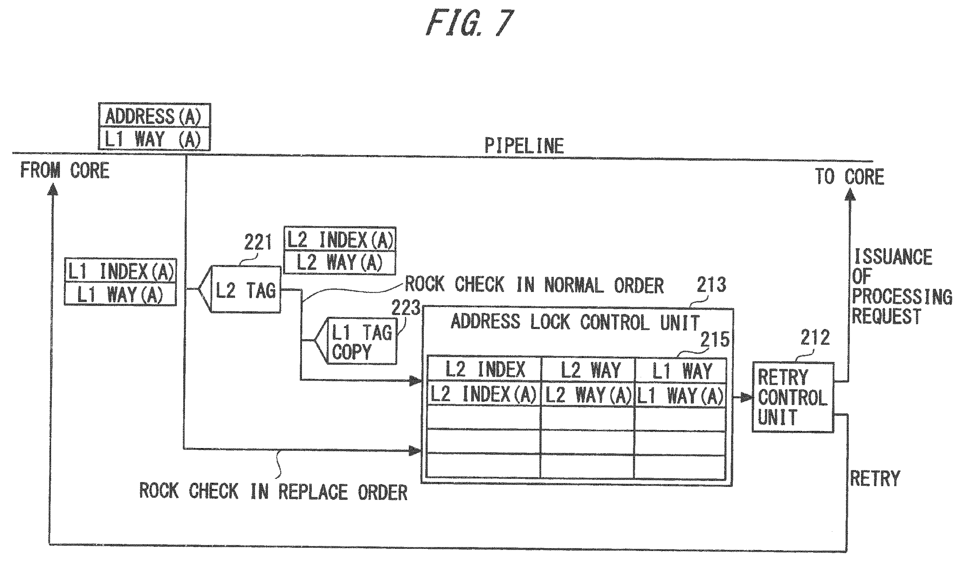

Subsequently, a lock check made by the address lock control unit 213 according to the present embodiment will be described by use of FIGS. 6A, 6B and 7. FIG. 6A illustrates the lock check when the instruction of the process related to the access request given from the processor core is the normal order. Further, FIG. 6B illustrates the lock check when the instruction of the process related to the access request given from the processor core is the REPLACE order. Note that FIG. 7 is a diagram of a summary of the lock check illustrated in FIGS. 6A and 6B. FIG. 7 illustrates the lock check made by the address lock control unit 213 according to the present embodiment.

The address lock control unit 213 determines whether the target of the process related to the access request given from the processor core is registered as the lock target or not, thereby performing the lock check. Note that the lock check differs depending on whether the instruction of the process related to the access request given from the processor core is the normal order or the REPLACE order.

If the instruction of the process related to the access request given from the processor core is the normal order, as illustrated in FIG. 6A, the lock check is conducted. To be specific, the relevant entry in the L2 tag 221 is retrieved based on the request address. If the data designated by the request address is stored in the L2 cache 200, the entry of the L2 tag 221, which is associated with the request address, is found out through this retrieval. In this case, the lock determining unit 216 refers to the lock target information retained by the address retaining unit 215, and thus retrieves the lock target information (entry) coincident with the L2 index and the L2 way that are specified by the entry of the L2 tag 221. Note that if the entry of the L2 tag 221 that is associated with the request address is not found out, there may be retrieved the lock target information coincident with the L2 index and the L2 way that are specified as the data storage location described above.

As a result of the retrieval, if the lock target information is found out, the lock determining unit 216 determines that the target of the access request given from the processor core is locked. Whereas if the lock target information is not found out, the lock determining unit 216 determines that the target of the access request given from the processor core is not locked. Then, the lock determining unit 216 hands over a determination result to the retry control unit 212. The retry control unit 212 controls retrying the process related to the access request given from the processor core on the basis of the determination result.

If the instruction of the process related to the access request given from the processor core is the REPLACE order, as illustrated in FIG. 6B, the lock check is carried out. Specifically, the lock determining unit 216 retrieves the lock target information coincident with the L1 index specified by the request address and with the L1 way specified by the request way. The L1 index and the L1 way used for the lock check are respectively the L1 index and the L1 way of the REPLACE target cache line in the L1 cache. Note that if the request address does not contain the index, the L1 index specified from the entry retrieved out of the L2 tag 221 may also be used.

Thus, the present embodiment, as compared with the conventional method, in the case of the lock check with respect to the REPLACE order, eliminates a necessity for the retrieving process in each cache tag and enables the lock check to be made based on only the information contained in the access request given from the processor core. Hence, the present embodiment improves the latency in the lock check with respect to the REPLACE order as compared with the conventional method.

It is to be noted that the present embodiment exemplifies the lock check using the 2-tuple of the L2 index and the L2 way or the 2-tuple of the L1 index and the L1 way on the occasion of performing the lock check. These 2-tuples are exemplifications of the lock check, and any types of combinations, if being the information contained in the lock target information, may be used for the lock check on the occasion of performing the lock check. For example, items of information indicating processor cores or items of information indicating data types, which are not used in the present embodiment, may also be employed for the lock check. These items of information used for the lock check may be properly selected depending on properties of the instructions to be processed.

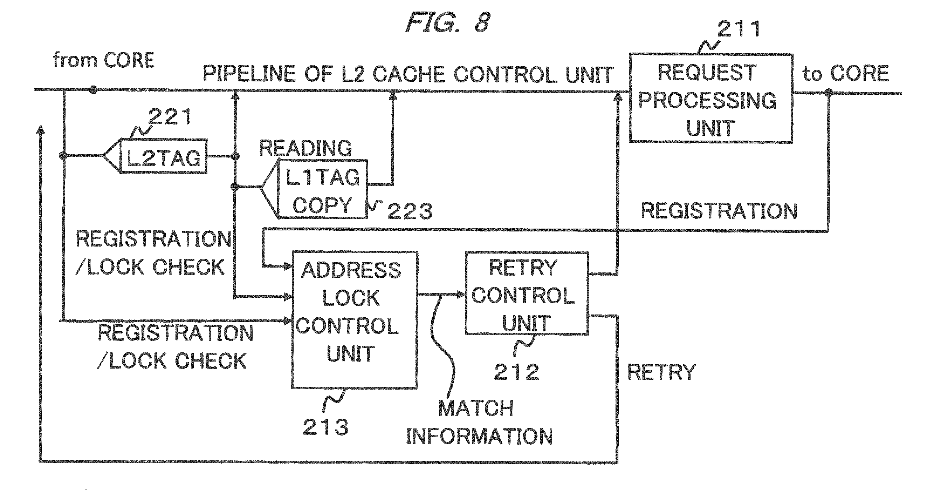

Note that FIG. 7 is a diagram in which the operational examples illustrated in FIGS. 6A and 6B are simplified and thus aggregated into one example. The lock determining unit 216 thus performs the lock check. Further, FIG. 8 is a diagram in which the lock target address registering process and the lock check process described so far are simplified and thus aggregated into one process. The address lock control unit 213 according to the present embodiment thus executes registering the lock target and the lock check.

### <Circuit Example>

Next, a circuit example of the address lock control unit 213 according to the present embodiment will be described by use of FIG. 9. FIG. 9 illustrates circuits of the address lock control unit 213. As illustrated in FIG. 9, the address lock control unit 213 according to the present embodiment includes a match circuit 230, an entry selecting circuit 231, a set/reset circuit 232, an input selecting circuit 233 and a retaining circuit 234. As illustrated in FIG. 9, the match circuit 230, the entry selecting circuit 231, the set/reset circuit 232 and the retaining circuit 234 are provided on the per core basis.

The match circuit 230 determines whether or not pieces of lock target indicating information stored respectively in four entries retained by the retaining circuit 234, which will be described later on, are coincident with items of information flowing on the pipelines and with pieces of processing target indicating information obtained from the L2 tag 221. Then, the match circuit 230 flows a result of this determination onto the pipelines. Note that the lock target indicating information is exemplified by the information indicating the core, the information indicating the data type, the L2 index, the L2 way, the L1 index, the L1 way, etc. described above. Then, if the instruction of the process related to the access request is the normal order, the information indicating the processing target represents the 2-tuple of the L2 index and the L2 way. Further, if the instruction of the process related to the access request is the REPLACE order, the information indicating the processing target represents the L1 index and the L1 way. Note that the match circuit 230 corresponds to the lock determining unit 216 in the present embodiment.

The entry selecting circuit 231 indicates an entry in which the data will be registered next from within the empty entries in the respective entries retained by the retaining circuit 234. The entry selecting circuit 231, if a plurality of empty entries exists, properly determines the entry in which the data will be registered next. Then, the entry selecting circuit 231 outputs a signal for indicating the determined entry.

The set/reset circuit 232 updates a status of each of the entries retained by the retaining unit 234. The statuses are expressed such that, e.g., a value "1" represents "valid", while a value "0" represents "invalid".

The input selecting circuit 233 selects the information to be stored in the retaining circuit 234, which will be explained later on, from the items of information flowing on the pipelines. The information to be stored in the retaining circuit 234 is the lock target information. The input selecting circuit 233 selects the information contained in the lock target information to be stored in the retaining circuit 234 from the items of information flowing on the pipeline, and hands over the selected information to the retaining circuit 234. Through this selection, the input selecting circuit 233 acquires the information indicating the lock target. The input selecting circuit 233 corresponds to the L1 attribute information acquiring unit 214 in the present embodiment.

The items of information flowing on the pipelines contain the request core, the request address, the request opcode, the request way, the retrieval result of the L2 tag 221 and the retrieval result of the L1 tag copy 223, which have been described above. The input selecting circuit 233 selects the information for specifying the lock target as explained in FIGS. 3A and 3B from the items of information flowing on the pipelines, and hands over the selected information to the retaining circuit 234.

Note that as will be described later on, a field for storing the information indicating the lock target core does not exist in the entry for storing the lock target information to be retained by the retaining circuit 234 depicted in FIG. 9. The lock target core is identified by preparing the entry on the per core basis. Hence, in the circuit example depicted in FIG. 9, the input selecting circuit 233, unlike the examples illustrated in FIGS. 3A, 3B, does not acquire the information indicating the lock target core.

Moreover, the input selecting circuit 233 may be disposed in a proper position on the pipeline. For example, the input selecting circuit 233 is disposed in the proper position on the pipeline from which the retrieval result of the L2 tag 221 and the retrieval result of the L1 tag copy 223 can be acquired.

The retaining circuit 234 stores the lock target information acquired from the input selecting circuit 233 in the entry. FIG. 9 illustrates the entries for four pieces of information. As depicted in FIG. 9, the entries retained by the retaining circuit 234 contain a "status" field, an "L2 index" field, an "L2 way" field, an "IF status" field, an "IF way" field, an "OP status" field and an "OP way" field.

The "status" field is stored with 1-bit information indicating "validity" of the relevant entry. For example, if the relevant entry is valid, "1" is stored in the "status" field. Whereas if the relevant entry is invalid, "0" is stored in the "status" field.

The "L2 index" field is stored with, e.g., a 11-bit L2 index. The "L2 way" field is stored with, e.g., a 5-bit L2 way. Further, the "IF way" field and the "OP way" field are stored with, e.g., 2-bits L1 ways.

The "IF status" field is stored with, e.g., 1-bit information indicating the validity of the "IF way" field in the relevant entry. If the "IF way" field is stored with the L1 way, the value "1" indicating the validity is stored in the "IF status" field.

Further, the "OP status" field is stored with, e.g., the 1-bit information indicating the validity of the "OP way" field in the relevant entry. If the L1 way is stored in the "OP way" field, "1" indicating the validity is stored in the "OP status" field.

Note that the entries retained by the retaining circuit 234 correspond to the address retaining unit 215 in the present embodiment. Moreover, the retaining circuit 234 acquires the lock target information from the pipeline, the L2 tag 221 and the L1 tag copy 223. The circuits related to this acquisition correspond to the L1 attribute information acquiring unit 214 in the present embodiment.

### <Specific Example>

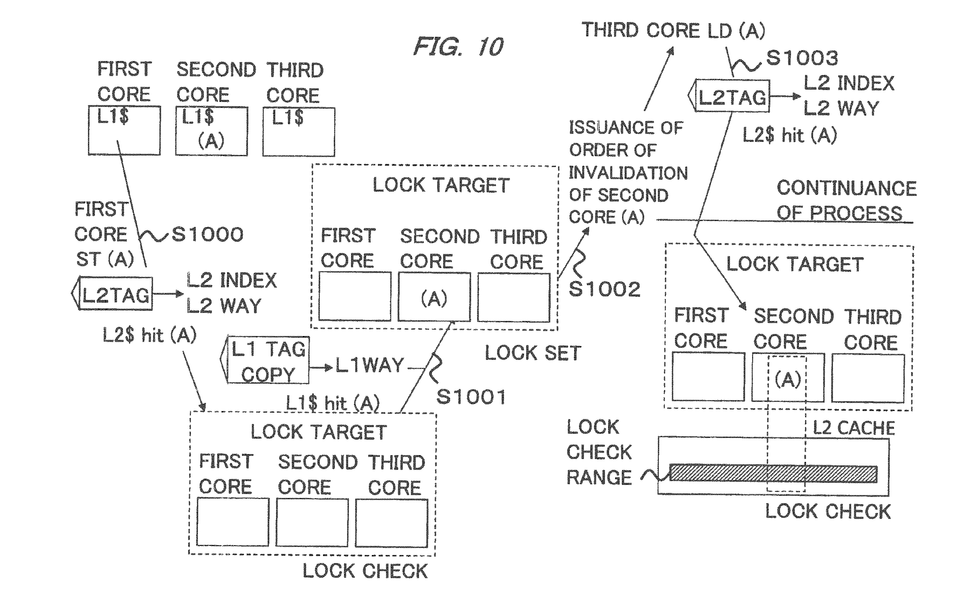

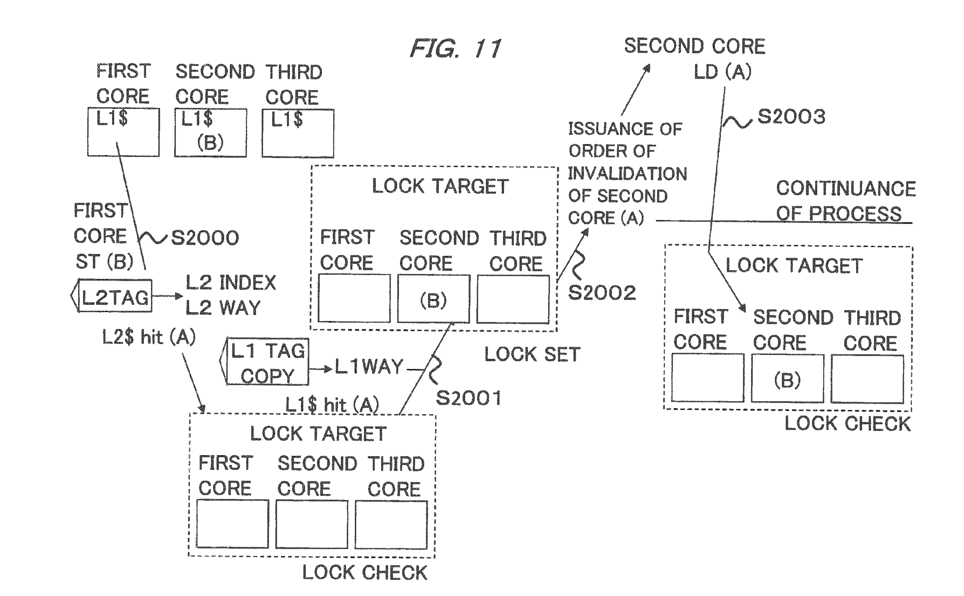

Next, an operational example of the address lock control unit 213 according to the present embodiment in a certain concrete situation will be described by use of FIGS. 10 and 11. Note that "step" is abbreviated to "S" in FIGS. 10 and 11.

In the concrete situation illustrated in FIGS. 10 and 11, it is assumed for simplifying the explanation that any cache miss does not occur in the L2 cache. It does not, however, mean that the situation, to which the present embodiment is applied, is limited to the situation as such. The cache mishit may occur in the L2 cache. Note that the process of acquiring the data from the main memory 400 is executed if the cache mishit occurs, and the process about the L2 REPLACE is executed if the REPLACE occurs.

FIG. 10 illustrates an operational example in a case where the second core retains the data designated by the address (A). It is noted, in a situation depicted in FIG. 10, the processing starts from a status of not registering the lock target.

In S1000, the first core issues a store instruction of the data designated by the address (A) (ST(A)). When the store instruction is issued, the address lock control unit of the L2 cache performs the lock check about whether this issued store instruction can be executed or not. The lock check is illustrated in FIG. 6A. The lock target is not yet registered at this point of time, and hence the store instruction issued by the first core is not locked. Accordingly, the store instruction transitions to being executed in the L2 cache.

In S1001, the lock target based on the store instruction transitioning to its execution is registered. FIG. 3A depicts this registering process. Hereat, at least the L2 index, the L2 way and the L1 way are registered as the items of information indicating the lock target.

In S1002, the request processing unit of the L2 cache requests the L1 cache of the second core to invalidate or rewrite the data designated by the address (A) in order to keep the coherency between the L1 cache and the L2 cache. The request processing unit of the L2 cache refers to the L1 tag copy within the L2 cache, thus detecting that the second core retains the relevant data. Note that in the second core, the L1 cache control unit refers to a status in the cache tag corresponding to the cache line stored with the data designated by the address (A), and thus determines whether the data designated by the address (A) is updated (dirty) or not. If the data designated by the address (A) is updated, the second core executes rewriting the relevant data on the basis of the access request given from the request processing unit of the L2 cache. Whereas if the data designated by the address (A) is not updated, the second core executes invalidating the relevant data.

In S1003, the third core issues a load instruction of the data designated by the address (A) (LD(A)). At this point of time, it is assumed that the lock registered in S1001 is not yet canceled. Namely, "S1003" is a process occurring during a period when executing the store instruction issued by the first core. When the load instruction is issued, the address lock control unit of the L2 cache performs the lock check about whether the issued load instruction is executable or not. This lock check is illustrated in FIG. 6A. As illustrated in FIG. 6A, in this case, the lock check is conducted by use of the L2 index and the L2 way.

Herein, the store instruction issued by the first core in S1000 and the load instruction are the processes for the same address (A). Therefore, the L2 index and the L2 way, which are specified by this load instruction, are coincident with the L2 index and the L2 way each registered as the lock target. Hence, the retry control unit cancels and retries executing the store instruction. The retrying as such continues till the lock target registered in S1001 is unlocked.

FIG. 11 depicts an operational example in a case where the second core retains the data designated by an address (B). Note that the processing starts from the status where the lock target is not yet registered also in a situation illustrated in FIG. 11.

In S2000, the first core issues a store instruction of the data designated by the address (B) (ST(B)). When the store instruction is issued, the address lock control unit of the L2 cache performs the lock check about whether this issued store instruction can be executed or not. This lock check is illustrated in FIG. 6A. The lock target is not yet registered at this point of time, and hence the store instruction issued by the first core is not locked. Accordingly, the store instruction transitions to being executed.

Next in S2001, the lock target based on the store instruction transitioning to its execution is registered. FIG. 3A depicts this registering process. Hereat, at least the L2 index, the L2 way and the L1 way are registered as the items of information indicating the lock target.

In S2002, the request processing unit of the L2 cache requests the L1 cache of the second core to invalidate or rewrite the data designated by the address (B) in order to keep the coherency between the L1 cache and the L2 cache. This point is the same as the operation illustrated in FIG. 10, and hence the explanation thereof is omitted.

In S2003, the second core issues the load instruction of the data designated by the address (A) during the period when the executing the store instruction (ST(B)) issued by the first core (LD(A)). Herein, it is assumed that the address (A) and the address (B) are defined as the same L1 index. Furthermore, it is assumed that there is no empty cache line within the set designated by the L1 index, the L1 REPLACE occurs, and the cache line stored with the data designated by the address (B) is selected as the REPLACE target line.

In this case, the load instruction is an instruction of the process related to the access request based on the L1 REPLACE. When the load instruction is issued, the address lock control unit of the L2 cache performs the lock check about whether the load instruction entailing the L1 REPLACE can be executed or not. FIG. 6B illustrates this lock check. As illustrated in FIG. 6B, in this case, the lock check using the L1 index and the L1 way, which are contained in the request given from the core, is carried out.

Herein, in S2001, the L1 index and the L1 way of the cache line of the second core stored with the data designated by the address (B) are registered as the items of information indicating the lock target. Then, the cache line of the second core stored with the data designated by the address (B) is the target line of the REPLACE occurring in S2003. Therefore, the L1 index and the L1 way, which are registered as the items of information indicating the lock target, are coincident with the L1 index and the L1 way related to the target of the REPLACE occurring in S2003. Hence, the retry control unit cancels and retries executing the load instruction entailing the L1 REPLACE. The retrying as such continues till the lock registered in S2001 is unlocked.

### §4 Operations and Effects of Present Embodiment

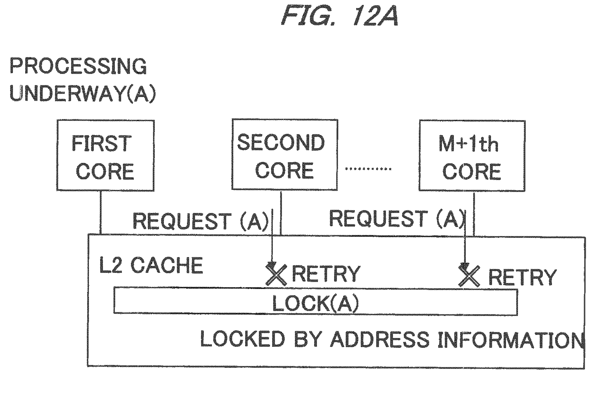

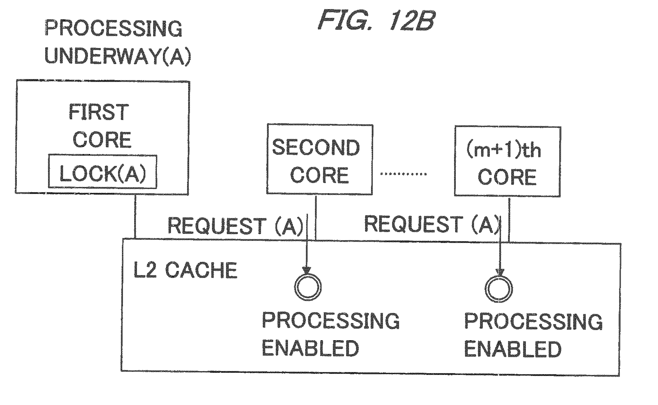

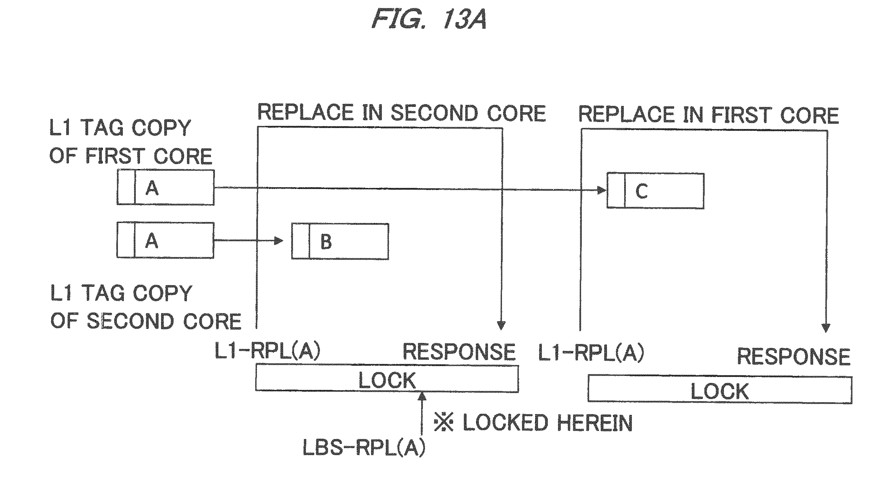

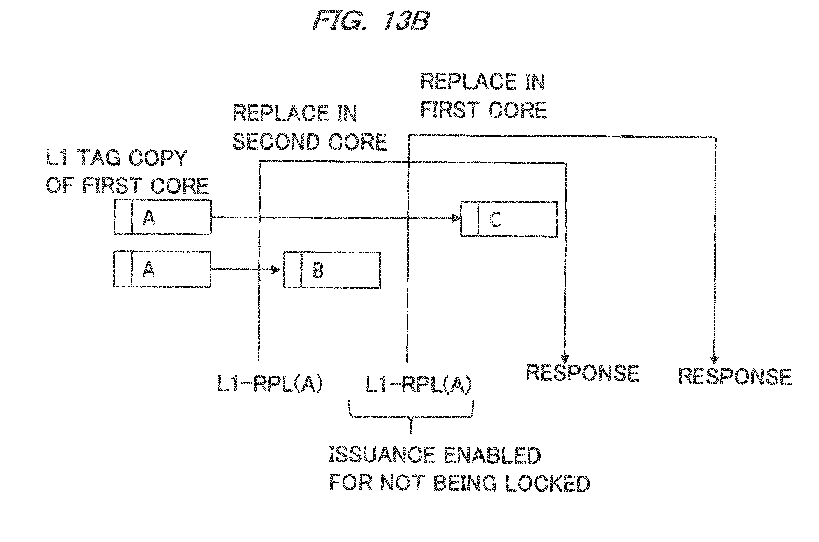

Finally, operations and effects according to the present embodiment will be described by use of FIGS. 12A, 12B, 13A and 13B.

FIG. 12A illustrates a range locked by a conventional method. FIG. 12B illustrates a range locked according to the present embodiment.

As depicted in FIG. 12A, in the case of designating the lock target by the full-size address or the 2-tuple of the L2 index and the L2 way, the relevant cache line of the L2 cache is locked. Hence, all of the accesses to the relevant cache line on the L2 cache are locked. By contrast with this, as illustrated in FIG. 12B, in the case of designating the lock target by further adding the items of information indicating the L1 way and the core, the data type information, etc. in addition to the conventional address information, e.g., the relevant cache line on the L1 cache is locked. Hence, the accesses in other cores are not locked.

Accordingly, the present embodiment enables the lock target range to be set more minutely than by the conventional method. With this setting, the present embodiment enables a possibility of the parallel processing to be more enhanced than by the conventional method.

A description of how the possibility of the parallel processing is enhanced, will be made by use of FIGS. 13A and 13B. FIGS. 13A and 13B depict a relationship between the lock and the REPLACE in the case of the occurrence of the L1 REPLACE about the cache lines stored with the data designated by the addresses A in the first core and the second core. FIG. 13A depicts the relationship between the lock and the REPLACE in the conventional method. Further, FIG. 13B depicts the relationship between the lock and the REPLACE in the present embodiment.

In the conventional method, the lock target is expressed (indicated) by the full-size address or the 2-tuple of the L2 index and the L2 way. Herein, both of the targets of the REPLACE occurring in the first core and the second core are the "addresses A". Hence, e.g., supposing that the L1 REPLACE in the second core is processed ahead, the L1 REPLACE in the first core cannot be processed depending on the lock registered based on the L1 REPLACE in the second core.

By contrast with this, in the present embodiment, the lock target is expressed (indicated) by the items of information indicating the L1 index, the L1 way and the core, the information indicating the data type, and so on. Hence, the L1 REPLACE in the first core can be removed from the lock executed based on the L1 REPLACE in the second core. Hence, in the present embodiment, the process related to the L1 REPLACE in the first core can be executed even during the period when executing the process related to the L1 REPLACE in the second core. Accordingly, the present embodiment enables the possibility of the parallel processing to be more enhanced than by the conventional method.

Moreover, in the conventional method, on the occasion of the lock check of the L1 REPLACE target address, the lock check is carried out after executing the retrieval of the L1 tag copy. By contrast with this, in the present embodiment, on the occasion of the lock check about the L1 REPLACE target address, the lock check is enabled by using the L1 index and the L1 way contained in the request. Namely, the present embodiment can omit the retrieval of the L1 tag copy in the lock check. Therefore, according to the present embodiment, it is feasible to improve a delay caused on the occasion of the lock check of the L1 REPLACE target address.

Note that as illustrated in FIG. 3A, in the case of registering the lock target address in the normal order, there occurs a delay corresponding to how long it takes the time to retrieve the L1 tag copy. The process of registering the lock target address is, however, the process conducted in parallel with the execution of the access request related to the lock. For this reason, this delay does not substantially affect a processing speed of the whole processes. In contrast with this, the lock check process is executed before executing the access request related to the lock. Consequently, the delay of the lock check directly affects the processing speed of the whole processes. Therefore, according to the present embodiment, the processing speed of the whole processes is also improved.

- 100, 110, 1m0: processor core
- 101, 111, 1m1: instruction control unit
- 102, 112, 1m2: arithmetic execution unit
- 103, 113, 1m3: L1 cache
- 104: L1 cache control unit
- 104a: address translation unit
- 104b: request processing unit
- 105: L1 instruction cache
- 105a: L1 tag
- 105b: L1 data
- 105: L1 operand cache
- 106a: L1 tag
- 106b: L1 data
- 200: L2 cache
- 210: L2 cache control unit
- 211: request processing unit
- 212: retry control unit
- 213: address lock control unit
- 214: L1 attribute information acquiring unit
- 215: address retaining unit
- 216: lock determining unit
- 220: L2 cache data unit
- 221: L2 tag
- 222: L2 data
- 223: L1 tag copy
- 230: match circuit
- 231: entry selecting circuit
- 232: set/reset circuit
- 233: input selecting circuit
- 234: retaining circuit

## Claims

1. An arithmetic processing apparatus comprising:
a plurality of arithmetic processing units to respectively output access requests as well as to perform arithmetic operations and to include first cache memories;
a second cache memory to retain data that are arithmetically processed respectively by the plurality of arithmetic processing units and to be shared between or among the plurality of arithmetic processing units;
an acquiring unit to acquire attribute information about a first cache memory of a control target access requester, the attribute information containing way information indicating a way of a cache block of the first cache memory becoming a control target in the arithmetic processing unit of the control target access requester;
a retaining unit to retain address information about a control target address specifying the cache block becoming a target of the control target access request in the second cache memory and to retain the acquired attribute information; and
a control unit to control the access request related to a REPLACE request for the cache block of the second cache memory that is specified by the control target address information and the attribute information on the basis of a REPLACE target address contained in the access request related to the REPLACE request issued by any one of the plurality of arithmetic processing units with respect to the first cache memory and on the basis of the way information indicating a way of the REPLACE target cache block in the first cache memory.

2. The arithmetic processing apparatus according to claim 1, wherein the acquiring unit further acquires at least any one of information indicating the arithmetic processing unit serving as the control target access requester and information indicating a data type of the data becoming an access request target.

3. A control method of an arithmetic processing apparatus comprising: a plurality of arithmetic processing units to respectively output access requests as well as to perform arithmetic operations and to include first cache memories; and a second cache memory to retain data that are arithmetically processed respectively by the plurality of arithmetic processing units and to be shared between or among the plurality of arithmetic processing units, the method comprising:
making the acquiring unit possessed by the arithmetic processing apparatus acquire attribute information about a first cache memory of a control target access requester, the attribute information containing way information indicating a way of a cache block of the first cache memory becoming a control target in the arithmetic processing unit of the control target access requester;
making a retaining unit possessed by the arithmetic processing apparatus retain address information about a control target address specifying the cache block becoming a target of the control target access request in the second cache memory and retain the acquired attribute information; and
making a control unit possessed by the arithmetic processing apparatus control the access request related to a REPLACE request for the cache block of the second cache memory that is specified by the control target address information and the attribute information on the basis of a REPLACE target address contained in the access request related to the REPLACE request issued by any one of the plurality of arithmetic processing units with respect to the first cache memory and on the basis of the way information indicating a way of the REPLACE target cache block in the first cache memory.

4. The control method of the arithmetic processing apparatus according to claim 3, further making the acquiring unit acquire at least any one of information indicating the arithmetic processing unit serving as the control target access requester and information indicating a data type of the data becoming an access request target.
